(19) Europäisches Patentamt
European Patent Office
Office européen des brevets

(11) **EP 4 152 584 A1**

(12) **EUROPEAN PATENT APPLICATION**
published in accordance with Art. 153(4) EPC

(43) Date of publication:
**22.03.2023 Bulletin 2023/12**

(51) International Patent Classification (IPC):
***H02M 1/084*** *(2006.01)*

(21) Application number: **20942921.6**

(52) Cooperative Patent Classification (CPC):
**H02M 1/084**

(22) Date of filing: **29.06.2020**

(86) International application number:
**PCT/CN2020/099007**

(87) International publication number:
**WO 2022/000199 (06.01.2022 Gazette 2022/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Longgang District,
Shenzhen,
Guangdong 518129 (CN)**

(72) Inventor: **XIAO, Zijian
Shenzhen, Guangdong 518129 (CN)**

(74) Representative: **Gill Jennings & Every LLP
The Broadgate Tower
20 Primrose Street
London EC2A 2ES (GB)**

(54) **MULTI-PHASE POWER SUPPLY AND ELECTRONIC DEVICE**

(57) A multiphase power supply and an electronic device are provided. The multiphase power supply includes power supply circuits of at least two phases. When supplying power to a load device, a power supply circuit of each of the at least two phases obtains a load voltage at two ends of the load device by using a first feedback end and a second feedback end of the power supply circuit of the phase. When the load voltage is different from a reference voltage, a specified voltage adjustment ratio corresponding to the power supply circuit of the phase is adjusted, so that the load voltage is close to the reference voltage as much as possible, thereby improving power supply stability of the multiphase power supply.

FIG. 3A

**(Cont. next page)**

FIG. 3B

## Description

### TECHNICAL FIELD

This application relates to the field of power supply technologies, and in particular, to a multiphase power supply and an electronic device.

### BACKGROUND

In recent years, consumer electronic products have gained great development and popularization, and charging is an indispensable step of using a consumer electronic product. Regardless of wired charging or wireless charging, a future development trend is a higher charging power and a higher charging speed. In a high-power charging scenario, because a charging voltage (which is usually set to a value not less than 4 volts and not greater than 5 volts in a present stage) required for an electronic device is limited, a charging speed of the electronic device can be increased only by adjusting a charging current of the electronic device. However, if the charging current of the electronic device is excessively large, a heat dissipation capability of the electronic device is affected, causing damage to a component in the electronic device.

Based on this, multiphase power supplies are widely used in electronic devices. When an electronic device is charged by using a multiphase power supply, although a charging voltage of the electronic device is limited, a charging current may be dispersed in parallel multiphase power supply circuits. In this case, even if the charging current is quite large, a charging current in a power supply circuit of each phase can be reduced. Obviously, in this manner, the electronic device can be quickly charged, and the current in the power supply circuit of each phase can also be prevented from overload, thereby helping protect a component in the electronic device.

In a conventional technology, a power supply circuit of each phase in a multiphase power supply directly supplies power to an electronic device based on a reference voltage. However, a circuit environment of the power supply circuit of each phase changes with time. For example, component impedance in the power supply circuit is small when power supply starts, and the component impedance in the power supply circuit becomes larger as time progresses. In this case, if power is directly supplied to the electronic device by using the reference voltage, an output voltage of the power supply circuit of each phase may continuously change, and may greatly deviate from the reference voltage, causing poor power supply stability of the multiphase power supply.

### SUMMARY

This application provides a multiphase power supply and an electronic device, so that a power supply circuit of each phase adjusts an output voltage of the power supply circuit of each phase based on a load voltage and a reference voltage. In this way, the output voltage of the power supply circuit of each phase can be close to the reference voltage as much as possible, thereby helping improve power supply stability of the multiphase power supply. Further, in this manner, the power supply circuit of each phase performs calculation to obtain a compensating voltage. Therefore, the power supply circuit of each phase may alternatively not need to receive a compensating voltage from a power supply circuit of another phase (for example, a primary -phase power supply circuit), so that a quantity of sensitive signals transmitted can be reduced, thereby avoiding a problem that voltage compensation in a power supply circuit is inaccurate due to noise interference occurring in a manner in which a compensating voltage is transmitted to perform voltage compensation, and improving accuracy of voltage compensation in the power supply circuit of each phase.

According to a first aspect, this application provides a multiphase power supply, including K phases of power supply circuits, where an $i^{th}$-phase power supply circuit includes an input end, an output end, a first feedback end, and a second feedback end, the output end and the first feedback end are connected to a first end of a load device, and the second feedback end is connected to a second end of the load device. After receiving an input electrical signal by using the input end, the $i^{th}$-phase power supply circuit adjusts the input electrical signal based on a specified voltage adjustment ratio corresponding to the $i^{th}$-phase power supply circuit to obtain an output electrical signal, and outputs the output electrical signal to the first end of the load device by using the output end. In addition, in a process of providing the output electrical signal for the load device, the $i^{th}$-phase power supply circuit may further obtain a load voltage at the two ends of the load device by using the first feedback end and the second feedback end, and when the load voltage is different from a reference voltage, adjust the specified voltage adjustment ratio corresponding to the $i^{th}$-phase power supply circuit. K is a positive integer greater than or equal to 2, and i is any positive integer ranging from 1 to K.

With the foregoing design, a power supply circuit of each phase in the power supply circuits of the K phases can autonomously adjust, based on the load voltage and the reference voltage, an output voltage corresponding to the power supply circuit of each phase. In one aspect, the output voltage of the power supply circuit of each phase can be close to the reference voltage as much as possible, thereby helping improve power supply stability of the multiphase power supply. In another aspect, the power supply circuit of each phase may alternatively not need to receive a compensating voltage sent by a power supply circuit of another phase (for example, a primary -phase power supply circuit). Therefore, compared with a manner in which a power supply circuit of a phase calculates a compensating voltage and then sends the compensating voltage to a power supply circuit of another phase for voltage compensation, in this manner, a quantity of sensitive signals transmitted between power supply circuits of different phases can be reduced. This avoids a problem that voltage compensation in a power supply circuit is inaccurate due to noise interference during transmission of a compensating voltage, and improves accuracy of voltage compensation in the power supply circuit of each phase.

In a possible design, the $i^{th}$-phase power supply circuit may include a subtracter and a voltage compensator. A first input end of the subtracter is connected to the first feedback end of the $i^{th}$-phase power supply circuit. A second input end of the subtracter is connected to the second feedback end of the $i^{th}$-phase power supply circuit. An output end of the subtracter is connected to a first input end of the voltage compensator. A second input end of the voltage compensator obtains the reference voltage. A power supply end of the voltage compensator is connected to the input end of the $i^{th}$-phase power supply circuit. An output end of the voltage compensator is connected to the output end of the $i^{th}$-phase power supply circuit. In this design, the subtracter may calculate a difference between a voltage signal received by the first input end and a voltage signal received by the second input end to obtain the load voltage at the two ends of the load device, and transmit the load voltage to the voltage compensator by using the output end. Correspondingly, the voltage compensator may adjust the specified voltage adjustment ratio based on the load voltage and the reference voltage, and adjust, based on the specified voltage adjustment ratio, the input electrical signal received by the input end to obtain the output electrical signal, so that the output electrical signal is close to the reference voltage as much as possible.

In a possible design, the subtracter includes a first operational amplifier, a first resistance element, a second resistance element, a third resistance element, and a fourth resistance element. A first end of the first resistance element is connected to the first input end of the subtracter. A second end of the first resistance element is separately connected to a positive input end of the first operational amplifier and a first end of the second resistance element. A second end of the second resistance element is connected to a grounding circuit. A first end of the third resistance element is connected to the second input end of the subtracter. A second end of the third resistance element is separately connected to a negative input end of the first operational amplifier and a first end of the fourth resistance element. A second end of the fourth resistance element is connected to an output end of the first operational amplifier. The output end of the first operational amplifier is connected to a first input end of a voltage adjustment ratio adjustment circuit. In this design, the first resistance element and the second resistance element can limit a voltage at the positive input end of the first operational amplifier. Based on a characteristic that voltages at the positive input end and the negative input end of the first operational amplifier are the same, in combination with a characteristic that the third resistance element and the fourth resistance element are connected in series for voltage division, a voltage at the output end of the subtracter can be exactly equal to a difference between voltages at the two input ends of the subtracter, so that the subtracter can implement a subtraction function.

In a possible design, a resistance value of the first resistance element is the same as a resistance value of the second resistance element, and a resistance value of the third resistance element is the same as a resistance value of the fourth resistance element. In this way, the subtracter can calculate the difference between the voltage signals input to the two input ends of the subtracter to obtain the load voltage at the two ends of the load device.

In a possible design, the voltage compensator includes the voltage adjustment ratio adjustment circuit and a voltage adjustment circuit. A voltage adjustment ratio of the voltage adjustment circuit is the specified voltage adjustment ratio. A first input end of the voltage adjustment ratio adjustment circuit is connected to the first input end of the voltage compensator. A second input end of the voltage adjustment ratio adjustment circuit is connected to the second input end of the voltage compensator. An output end of the voltage adjustment ratio adjustment circuit is connected to a control end of the voltage adjustment circuit. An input end of the voltage adjustment circuit is connected to the power supply end of the voltage compensator. An output end of the voltage adjustment circuit is connected to the output end of the voltage compensator. In this design, the voltage adjustment ratio adjustment circuit can determine, based on a difference between the load voltage and the reference voltage, a voltage adjustment ratio required for the $i^{th}$-phase power supply circuit, and then may adjust the specified voltage adjustment ratio of the voltage adjustment circuit to the required voltage adjustment ratio. In this way, an output electrical signal obtained by the voltage adjustment circuit by adjusting the input electrical signal by using the required voltage adjustment ratio can be close to the reference voltage as much as possible.

In a possible design, the voltage adjustment ratio adjustment circuit includes a first integrator, a comparator, and a driver, and the voltage adjustment circuit includes a switch circuit. A first input end of the first integrator is connected to the first input end of the voltage adjustment ratio adjustment circuit. A second input end of the first integrator is connected to the second input end of the voltage adjustment ratio adjustment circuit. An output end of the first integrator is connected to a negative input end of the comparator. A positive input end of the comparator receives a phase-staggered triangular wave signal corresponding to the $i^{th}$-phase power supply circuit. An output end of the comparator is connected to an input end of the driver. An output end of the driver is connected to the output end of the voltage adjustment ratio adjustment circuit. A control end of the switch circuit is connected to the control end of the voltage adjustment circuit. An input end of the switch circuit is connected to the input end of the voltage adjustment circuit. An output end of the switch circuit is connected to the output end of the voltage adjustment circuit. In this design, the first integrator can perform integral processing on an instantaneous voltage difference between the load voltage and the reference voltage to obtain a compensating voltage, and the comparator can compare the compensating voltage obtained through integration with the phase-staggered triangular wave signal corresponding to the $i^{th}$-phase power supply circuit to obtain a control signal corresponding to the $i^{th}$-phase power supply circuit. In this way, the driver drives, based on the control signal corresponding to the $i^{th}$-phase power supply circuit, each switching transistor in the switch circuit to be switched on or switched off. This not only can enable the $i^{th}$-phase power supply circuit to supply power to the load device based on a power supply time period corresponding to the power supply circuit of the phase, but also can make the output electrical signal provided by the $i^{th}$-phase power supply circuit for the load device be close to the reference voltage as much as possible.

In a possible design, the first integrator includes a second operational amplifier, a first impedance element, and a second impedance element. A first end of the first impedance element is connected to the first input end of the first integrator. A second end of the first impedance element is separately connected to a negative input end of the second operational amplifier and a first end of the second impedance element. A positive input end of the second operational amplifier is connected to the second input end of the first integrator. A second end of the second impedance element is connected to an output end of the second operational amplifier. The output end of the second operational amplifier is connected to the negative input end of the comparator. In this design, based on the first impedance element, the first integrator can charge the second impedance element by using an instantaneous voltage difference between the two input ends, to perform integration on the instantaneous voltage difference to obtain the voltage difference between the load voltage and the reference voltage.

In a possible design, the $i^{th}$-phase power supply circuit further includes a current sampler. An input end of the current sampler is connected to the output end of the voltage adjustment circuit. A first output end of the current sampler is connected to the negative input end of the second operational amplifier. The current sampler can obtain, by using the input end of the current sampler, a load voltage signal output by the $i^{th}$-phase power supply circuit, adjust the load current signal based on a first sampling ratio, and then output an adjusted load current signal to the negative input end of the second operational amplifier by using the first output end of the current sampler. In this design, based on a characteristic that no current flows through the negative input end of the operational amplifier, the adjusted load current may be output to the first impedance element by using the first impedance element. In this way, the load voltage output by the subtracter can change linearly with a change of the load current, thereby helping the $i^{th}$-phase power supply circuit implement an adaptive voltage positioning function.

In a possible design, the multiphase power supply includes a primary-phase power supply circuit and at least one secondary-phase power supply circuit, and the multiphase power supply further includes an output end controller. The output end controller is configured to: turn on a first output end of a current sampler of the primary -phase power supply circuit, or turn on a first output end of a current sampler of the at least one secondary -phase power supply circuit. In this design, when adaptive voltage positioning of a power supply circuit of a phase needs to be implemented, a first output end of a current sampler of the power supply circuit of the phase may be turned on; or when adaptive voltage positioning of a power supply circuit of a phase does not need to be implemented, a first output end of a current sampler of the power supply circuit of the phase may be turned off. In this manner, whether adaptive voltage positioning of a power supply circuit of a phase is to be implemented can be set according to a user requirement, so that flexibility is higher.

In a possible design, the multiphase power supply includes a primary-phase power supply circuit and at least one secondary-phase power supply circuit. Each of the at least one secondary-phase power supply circuit may further include a current equalizer. A first input end of the current equalizer is connected to a second output end of a current sampler of the primary-phase power supply circuit. A second input end of the current equalizer is connected to a second output end of a current sampler of the secondary-phase power supply circuit. An output end of the current equalizer is connected to a positive input end of a second operational amplifier of the secondary-phase power supply circuit. A current sampler of a power supply circuit of each phase is further configured to: adjust, based on a second sampling ratio, a load current signal output by the power supply circuit, and output an adjusted load current signal by using a second output end of the current sampler. In this design, each secondary-phase power supply circuit can further implement a current equalization function by using the current equalizer, so that a load current in the secondary -phase power supply circuit is close to a load current in the primary-phase power supply circuit as much as possible. This helps power supply circuits of different phases maintain a same load current characteristic.

In a possible design, the current equalizer may include a first summator and a second integrator. A positive input end of the first summator is connected to the second output end of the current sampler of the primary-phase power supply circuit. A negative input end of the first summator is connected to the second output end of the current sampler of the secondary-phase power supply circuit. An output end of the first summator is connected to a negative input end of the second integrator. A positive input end of the second integrator is connected to the grounding circuit. An output end of the second integrator is connected to the positive input end of the second operational amplifier of the secondary-phase power supply circuit. In this design, the first summator can obtain the load current in the primary-phase power supply circuit by using the positive input end, and obtain a load current in a present secondary -phase power supply circuit by using the negative input end. In this way, the first summator can calculate a current difference between the load current in the present secondary-phase power supply circuit and the load current in the primary-phase power supply circuit, to provide a compensation reference for current equalization compensation in the present secondary-phase power supply circuit.

In a possible design, the second integrator includes a third operational amplifier, a third impedance element, and a fourth impedance element. A first end of the third impedance element is connected to the output end of the first summator. A second end of the third impedance element is separately connected to a negative input end of the third operational amplifier and a first end of the fourth impedance element. A positive input end of the third operational amplifier is connected to the grounding circuit. A second end of the fourth impedance element is connected to an output end of the third operational amplifier. The output end of the third operational amplifier is connected to the positive input end of the second operational amplifier of the secondary -phase power supply circuit. In this design, based on the third impedance element, the second integrator can charge the fourth impedance element by using an instantaneous current difference between the two input ends, to perform integration on the instantaneous current difference to obtain a current equalization compensating voltage of the secondary -phase power supply circuit relative to the primary-phase power supply current.

In a possible design, the first integrator further includes a second summator. A first positive input end of the second summator is connected to the output end of the second integrator. A second positive input end of the second summator obtains the reference voltage. An output end of the second summator is connected to the positive input end of the second operational amplifier. In this design, the second summator can obtain the current equalization compensating voltage by using the first positive input end of the second summator, and obtain the reference voltage by using the second positive input end of the second summator. In this way, the first integrator can calculate, based on the current equalization compensating voltage, the reference voltage, and the load voltage, a compensating voltage corresponding to the secondary-phase power supply circuit. In this manner, both impact of the voltage difference between the reference voltage and the load voltage and impact of current equalization compensation are considered in the compensating voltage of the secondary-phase power supply circuit, thereby helping improve accuracy of voltage compensation performed by the secondary -phase power supply circuit.

In a possible design, the multiphase power supply includes a primary-phase power supply circuit and at least one secondary-phase power supply circuit. The primary-phase power supply circuit is located in a primary-phase chip. One or more secondary-phase power supply circuits of the at least one secondary-phase power supply circuit are located in at least one secondary-phase chip. In this design, the power supply circuits of the K phases are disposed in at least two power supply chips. This helps reduce space occupied by the power supply chips, and avoids a problem that a circuit structure is excessively complex when all the power supply circuits are disposed in one power supply chip.

According to a second aspect, this application provides a multiphase power supply, including power supply circuits of K phases. An $i^{th}$-phase power supply circuit includes a subtracter, a voltage adjustment ratio adjustment circuit, and a voltage adjustment circuit. A voltage adjustment ratio of the voltage adjustment circuit is a specified voltage adjustment ratio. A first input end of the subtracter is connected to a first end of a load device. A second input end of the subtracter is connected to a second end of the load device. An output end of the subtracter is connected to a first input end of the voltage adjustment ratio adjustment circuit. A second input end of the voltage adjustment ratio adjustment circuit obtains a reference voltage. An output end of the voltage adjustment ratio adjustment circuit is connected to a control end of the voltage adjustment circuit. An input end of the voltage adjustment circuit receives an input electrical signal corresponding to the $i^{th}$-phase power supply circuit. An output end of the voltage adjustment circuit is connected to the first end of the load device. K is a positive integer greater than or equal to 2, and i may be any positive integer ranging from 1 to K.

In a possible design, the subtracter includes a first operational amplifier, a first resistance element, a second resistance element, a third resistance element, and a fourth resistance element. A first end of the first resistance element is connected to the first input end of the subtracter. A second end of the first resistance element is separately connected to a positive input end of the first operational amplifier and a first end of the second resistance element. A second end of the second resistance element is connected to a grounding circuit. A first end of the third resistance element is connected to the second input end of the subtracter. A second end of the third resistance element is separately connected to a negative input end of the first operational amplifier and a first end of the fourth resistance element. A second end of the fourth resistance element is connected to an output end of the first operational amplifier. The output end of the first operational amplifier is connected to a first input end of a voltage adjustment ratio adjustment circuit.

In a possible design, the voltage adjustment ratio adjustment circuit includes a first integrator, a comparator, and a driver, and the voltage adjustment circuit includes a switch circuit. A first input end of the first integrator is connected to the first input end of the voltage adjustment ratio adjustment circuit. A second input end of the first integrator is connected to the second input end of the voltage adjustment ratio adjustment circuit. An output end of the first integrator is connected to a negative input end of the comparator. A positive input end of the comparator receives a phase-staggered triangular wave signal corresponding to the $i^{th}$-phase power supply circuit. An output end of the comparator is connected to an input end of the driver. An output end of the driver is connected to the output end of the voltage adjustment ratio adjustment circuit. A control end of the switch circuit is connected to the control end of the voltage adjustment circuit. An input end of the switch circuit is connected to the input end of the voltage adjustment circuit. An output end of the switch circuit is connected to the output end of the voltage adjustment circuit.

In a possible design, the first integrator includes a second operational amplifier, a first impedance element, and a second impedance element. A first end of the first impedance element is connected to the first input end of the first integrator. A second end of the first impedance element is separately connected to a negative input end of the second operational amplifier and a first end of the second impedance element. A positive input end of the second operational amplifier is connected to the second input end of the first integrator. A second end of the second impedance element is connected to an output end of the second operational amplifier. The output end of the second operational amplifier is connected to the negative input end of the comparator.

In a possible design, the $i^{th}$-phase power supply circuit further includes a current sampler. An input end of the current sampler is connected to the output end of the voltage adjustment circuit. A first output end of the current sampler is connected to the negative input end of the second operational amplifier. The current sampler may obtain, by using the input end of the current sampler, a load voltage signal output by the $i^{th}$-phase power supply circuit, adjust the load current signal based on a first sampling ratio, and then output an adjusted load current signal by using the first output end of the current sampler.

In a possible design, the multiphase power supply may include a primary-phase power supply circuit and at least one secondary-phase power supply circuit, and the multiphase power supply may further include an output end controller. The output end controller is configured to: turn on a first output end of a current sampler of the primary-phase power supply circuit, or turn on a first output end of a current sampler of the at least one secondary-phase power supply circuit.

In a possible design, the multiphase power supply includes a primary-phase power supply circuit and at least one secondary-phase power supply circuit. Each of the at least one secondary-phase power supply circuit may further include a current equalizer. A first input end of the current equalizer is connected to a second output end of a current sampler of the primary-phase power supply circuit. A second input end of the current equalizer is connected to a second output end of a current sampler of the secondary-phase power supply circuit. An output end of the current equalizer is connected to a positive input end of a second operational amplifier of the secondary-phase power supply circuit. A current sampler of a power supply circuit of each phase is further configured to: adjust, based on a second sampling ratio, a load current signal output by the power supply circuit, and output an adjusted load current signal by using a second output end of the current sampler.

In a possible design, the current equalizer includes a first summator and a second integrator. A positive input end of the first summator is connected to the second output end of the current sampler of the primary-phase power supply circuit. A negative input end of the first summator is connected to the second output end of the current sampler of the secondary-phase power supply circuit. An output end of the first summator is connected to a negative input end of the second integrator. A positive input end of the second integrator is connected to the grounding circuit. An output end of the second integrator is connected to the positive input end of the second operational amplifier of the secondary-phase power supply circuit.

In a possible design, the second integrator includes a third operational amplifier, a third impedance element, and a fourth impedance element. A first end of the third impedance element is connected to the output end of the first summator. A second end of the third impedance element is separately connected to a negative input end of the third operational amplifier and a first end of the fourth impedance element. A positive input end of the third operational amplifier is connected to the grounding circuit. A second end of the fourth impedance element is connected to an output end of the third operational amplifier. The output end of the third operational amplifier is connected to the positive input end of the second operational amplifier of the secondary-phase power supply circuit.

In a possible design, the first integrator further includes a second summator. A first positive input end of the second summator is connected to the output end of the second integrator. A second positive input end of the second summator obtains the reference voltage. An output end of the second summator is connected to the positive input end of the second operational amplifier.

In a possible design, the multiphase power supply includes a primary-phase power supply circuit and at least one secondary-phase power supply circuit. The primary-phase power supply circuit is located in a primary-phase chip. One or more secondary-phase power supply circuits of the at least one secondary-phase power supply circuit are located in at least one secondary-phase chip.

According to a third aspect, this application provides an electronic device, including the multiphase power supply according to the first aspect or the second aspect, and a phase controller. The multiphase power supply includes power supply circuits of K phases, where K is a positive integer greater than or equal to 2. The phase controller is connected to a phase control end of a power supply circuit of each phase in the power supply circuits of the K phases. The phase controller may send, to the phase control end of the power supply circuit of each phase, a phase-staggered triangular wave signal corresponding to the power supply circuit of each phase, so that the power supply circuit of each phase supplies power to the electronic device in a corresponding power supply time period based on the phase-staggered triangular wave signal corresponding to the power supply circuit of each phase.

These aspects or other aspects of this application are described in detail in the following embodiments.

**BRIEF DESCRIPTION OF DRAWINGS**

FIG. 1 is an example schematic diagram of a circuit structure of a multiphase power supply;

FIG. 2 is an example schematic diagram of a connection relationship between power supply circuits of different phases in a multiphase power supply according to an embodiment of this application;

FIG. 3A and FIG. 3B are an example schematic diagram of a circuit structure of a multiphase power supply according to an embodiment of this application;

FIG. 4 is an example diagram of a waveform of a phase-staggered triangular wave signal corresponding to a primary-phase power supply circuit;

FIG. 5 is an example diagram of a waveform of a control square wave signal corresponding to a primary-phase power supply circuit;

FIG. 6 is an example diagram of load characteristics of power supply circuits of different phases; and

FIG. 7 is another example diagram of load characteristics of power supply circuits of different phases.

**DESCRIPTION OF EMBODIMENTS**

The following clearly and completely describes the technical solutions in embodiments of this application with reference to the accompanying drawings in embodiments of this application. It should be understood that, in descriptions of this application, "a plurality of" is understood as "at least two". Terms such as "first" and "second" are merely intended for a purpose of differentiated description, and should not be construed as an indication or an implication of relative importance, or an indication or an implication of a sequence. For example, a "first sampling ratio" and a "second sampling ratio" mentioned below are both intended to indicate a sampling ratio, and are not differentiated in terms of an order or importance.

In recent years, multiphase power supplies have gained increasingly wide application in the field of power electronics. With a multiphase power supply used in an electronic device, in one aspect, parallel multiphase power supply circuits can be used to supply power to the electronic device, thereby increasing a charging speed of the electronic device; and in another aspect, in a high-power charging scenario, a current in a component of the electronic device can be reduced, thereby reducing an electric energy loss, and improving charging efficiency of the electronic device. However, the multiphase power supply includes the parallel multiphase power supply circuits, and circuit environments of power supply circuits of different phases cannot be completely the same. Therefore, if a power supply circuit of each phase determines an output voltage of the power supply circuit directly by using a reference voltage, the output voltage of the power supply circuit of each phase may greatly deviate from the reference voltage. As a result, stability of supplying power by the multiphase power supply to a load device is poor. Based on this, how to determine an output voltage of a power supply circuit of each phase is an important issue in the field of multiphase power supplies.

To resolve the foregoing problem, a voltage compensation solution may be set in a multiphase power supply. The following first describes a multiphase power supply and a corresponding voltage compensation solution.

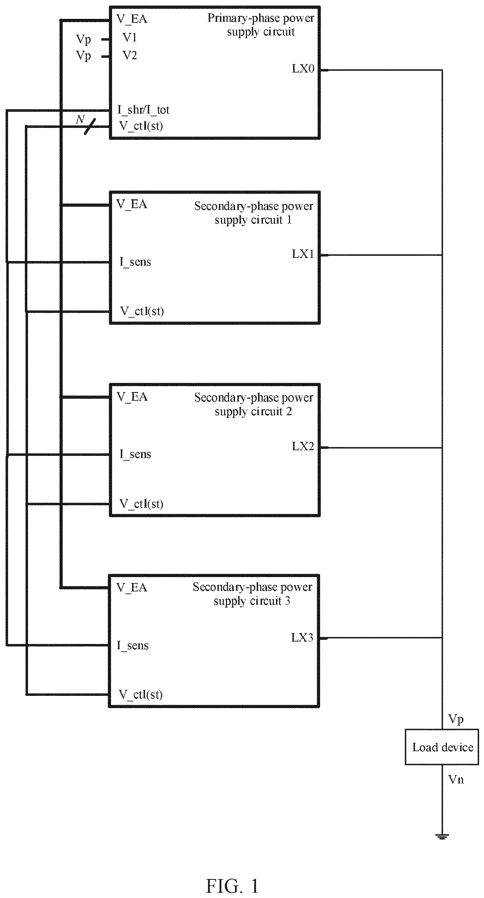

FIG. 1 is an example schematic diagram of a circuit structure of a multiphase power supply. As shown in FIG. 1, the multiphase power supply includes a primary-phase power supply circuit and at least one secondary-phase power supply circuit, for example, a secondary-phase power supply circuit 1, a secondary-phase power supply circuit 2, and a secondary -phase power supply circuit 3. Output ends of the primary-phase power supply circuit and each secondary-phase power supply circuit are connected to a first end of a load device. In this way, the primary-phase power supply circuit and each secondary-phase power supply circuit can supply power to the load device in parallel. The primary-phase power supply circuit includes a V1 port, a V2 port, a V EA port, and an I_shr/I_tot port. Each of a secondary-phase power supply circuit 1 to a secondary-phase power supply circuit 3 includes a V EA port and an I sens port. As shown in FIG. 1, the V1 port of the primary-phase power supply circuit may be connected to the first end of the load device, the V2 port of the primary -phase power supply circuit may be connected to a second end of the load device, the V EA port of the primary-phase power supply circuit may be connected to the V EA port of each secondary-phase power supply circuit, and the I shr/I tot port of the primary-phase power supply circuit may be connected to the I_sens port of each secondary-phase power supply circuit. For example, as shown in FIG. 1, the primary-phase power supply circuit and each secondary-phase power supply circuit may further include a V ctl(state) port. The V ctl(state) port is configured to transmit a phase control signal and/or a state feedback signal between the primary-phase power supply circuit and each secondary-phase power supply circuit. Because the V ctl(state) port is irrelevant to the voltage compensation solution in this application, details are not described herein.

In the multiphase power supply shown in FIG. 1, the primary-phase power supply circuit and each secondary-phase power supply circuit perform voltage compensation in the following manner: In a process of supplying power to the load device, the primary-phase power supply circuit collects a voltage Vp at the first end of the load device by using the V1 port, collects a voltage Vn at the second end of the load device by using the V2 port, then determines a compensating voltage based on the voltage Vp, the voltage Vn, and a reference voltage, and sends the compensating voltage to the V_EA port of each secondary-phase power supply circuit by using the V_EA port of the primary-phase power supply circuit. Correspondingly, after each secondary-phase power supply circuit receives, by using the V EA port of each secondary-phase power supply circuit, the compensating voltage sent by the primary-phase power supply circuit, each secondary-phase power supply circuit may perform a voltage compensation process for each secondary-phase power supply circuit based on the compensating voltage. In this manner, because each secondary-phase power supply circuit performs a subsequent voltage compensation process based on the compensating voltage, the compensating voltage is actually a sensitive signal. However, in this manner, the primary-phase power supply circuit needs to send the compensating voltage to each secondary-phase power supply circuit. This not only makes wiring between the primary-phase power supply circuit and the secondary-phase power supply circuit complex, but also may cause noise interference to the compensating voltage during transmission of the compensating voltage. As a result, an offset between a compensating voltage received by the secondary-phase power supply circuit and the compensating voltage sent by the primary-phase power supply circuit is large, affecting accuracy of voltage compensation subsequently performed by the secondary-phase power supply circuit. In a possible case, a shield wire may be added at two ends of wiring to avoid noise interference. However, in this manner, equivalent parasitic capacitance between the multiphase power supply and the ground increases, affecting stability and transient response of the multiphase power supply. Therefore, the manner of adding the shield wire is actually not quite appropriate either. In addition, when a quantity of secondary-phase power supply circuits is greater than or equal to 2, distances between the secondary-phase power supply circuits and the primary-phase power supply circuit may be different. In this case, times at which the compensating voltage sent by the primary-phase power supply circuit reaches the secondary-phase power supply circuits are also different. As a result, response times at which the secondary-phase power supply circuits perform voltage compensation are also different, and a phenomenon of current oscillation may occur between phases.

Based on this, this application provides a multiphase power supply, so that a power supply circuit of each phase autonomously adjusts an output voltage of the power supply circuit of each phase based on a load voltage and a reference voltage. In one aspect, this manner helps the output voltage of the power supply circuit of each phase approach the reference voltage as fast as possible, thereby improving power supply stability of the multiphase power supply; and in another aspect, this manner further allows the power supply circuit of each phase not to receive a compensating voltage from a power supply circuit of another phase (for example, a primary-phase power supply circuit), so that a quantity of sensitive signals transmitted can be reduced, thereby avoiding a problem that voltage compensation in a power supply circuit is inaccurate due to noise interference occurring during transmission of a compensating voltage, and improving accuracy of voltage compensation in the power supply circuit of each phase, and further, a phenomenon of current oscillation between power supply circuits of different phases can be alleviated.

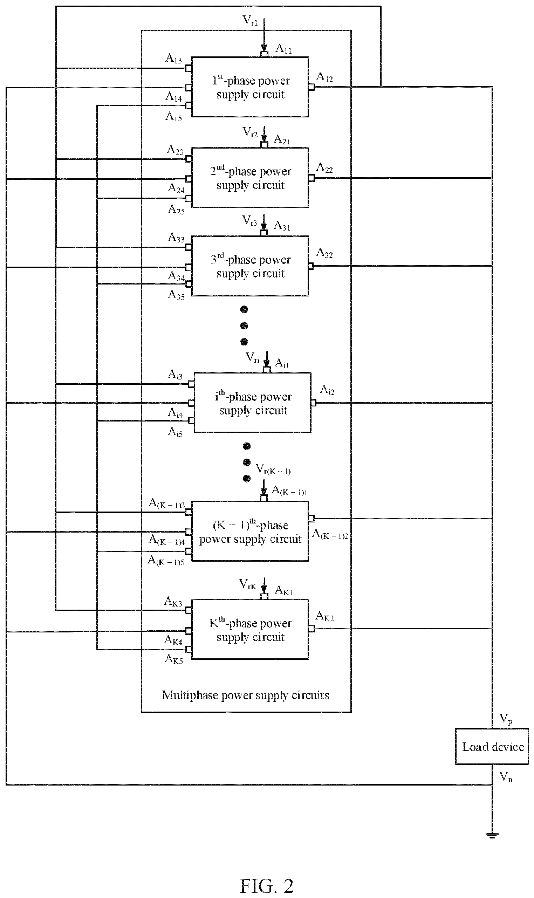

FIG. 2 is an example schematic diagram of a connection relationship between power supply circuits of different phases in a multiphase power supply according to an embodiment of this application. As shown in FIG. 2, the multiphase power supply may include power supply circuits of K phases, where K is a positive integer greater than or equal to 2. For example, the multiphase power supply may include a $1^{st}$-phase power supply circuit, a $2^{nd}$-phase power supply circuit, ..., and a $K^{th}$-phase power supply circuit shown in FIG. 2. For a power supply circuit of each phase (for example, an $i^{th}$-phase power supply circuit, where i may be any positive integer not greater than K) in the power supply circuits of the K phases, the $i^{th}$-phase power supply circuit may include an input end ($A_{i1}$), a first feedback end ($A_{i3}$), a second feedback end ($A_{i4}$), and an output end ($A_{i2}$). The input end $A_{i1}$ of the $i^{th}$-phase power supply circuit is configured to receive an input electrical signal corresponding to the $i^{th}$-phase power supply circuit. The output end $A_{i2}$ of the $i^{th}$-phase power supply circuit is connected to a first end of a load device. The $i^{th}$-phase power supply circuit can provide a power-level output electrical signal for the load device by using the output end $A_{i2}$ of the $i^{th}$-phase power supply circuit. The first feedback end $A_{i3}$ of the $i^{th}$-phase power supply circuit is connected to the first end of the load device. The second feedback end $A_{i4}$ of the $i^{th}$-phase power supply circuit is connected to a second end of the load device. The second end of the load device may be connected to a grounding circuit.

The following describes a voltage compensation process of the power supply circuit of each phase by using the $i^{th}$-phase power supply circuit as an example.

The $i^{th}$-phase power supply circuit may receive an input electrical signal ($V_{ri}$) by using the first input end $A_{i1}$ of the $i^{th}$-phase power supply circuit, and may adjust the input electrical signal $V_{ri}$ based on a specified voltage adjustment ratio corresponding to the $i^{th}$-phase power supply circuit to obtain an output electrical signal, and then output an adjusted output electrical signal to the first end of the load device by using the output end $A_{i2}$. In the voltage adjustment process, the $i^{th}$-phase power supply circuit may further obtain a first voltage signal ($V_p$) at the first end of the load device by using the first feedback end $A_{i3}$, obtain a second voltage signal ($V_n$) at the second end of the load device by using the second feedback end $A_{i4}$, and then calculate a load voltage ($V_p - V_n$) at the two ends of the load device based on the first voltage signal $V_p$ and the second voltage signal $V_n$. If the load voltage $V_p - V_n$ is equal to a reference voltage, it indicates that the specified voltage adjustment ratio meets an output voltage requirement of the load device, and the $i^{th}$-phase power supply circuit may not need to perform voltage compensation. Therefore, subsequently, the $i^{th}$-phase power supply circuit may continue to adjust the input electrical signal $V_n$ based on the specified voltage adjustment ratio to obtain an output voltage signal corresponding to the $i^{th}$-phase power supply circuit. If the load voltage $V_p - V_n$ is not equal to the reference voltage, it indicates that the specified voltage adjustment ratio does not meet the output voltage requirement of the load device, and the $i^{th}$-phase power supply circuit needs to perform voltage compensation. Therefore, subsequently, the $i^{th}$-phase power supply circuit may calculate a compensating voltage based on the load voltage $V_p - V_n$ and the reference voltage, and then adjust the specified voltage adjustment ratio based on the compensating voltage, to achieve the following: After the input electrical signal $V_{ri}$ is adjusted by using an adjusted voltage adjustment ratio to obtain an output voltage signal, and the output voltage signal obtained through adjustment is output to the first end of the load device, a load voltage at the two ends of the load device is equal to the reference voltage as much as possible.

In this embodiment of this application, the reference voltage may be set based on an output voltage required for the load device. For example, when the load device is a battery of an electronic device, if a charging voltage required for the battery of the electronic device is 4.5 V, the reference voltage may be set to 4.5 V The reference voltage may be preset in a power supply circuit of each phase when the electronic device is delivered out of a factory, or may be obtained by a dedicated interface disposed in the power supply circuit of each phase by receiving a reference voltage signal sent by the load device side. This is not specifically limited. For example, real-time performance of receiving the reference voltage signal by using the dedicated interface is higher, and an output voltage of the power supply circuit of each phase may also be continuously adjusted based on reference voltages corresponding to different requirements. Therefore, in this embodiment of this application, an implementation of determining the reference voltage in real time by receiving the reference voltage signal by using the dedicated interface is preferentially used.

In the foregoing implementation, because the power supply circuit of each phase can adjust the output voltage of the power supply circuit of each phase based on the load voltage and the reference voltage, the output voltage of the power supply circuit of each phase can be close to the reference voltage as much as possible, thereby helping improve power supply stability of the multiphase power supply. Further, when voltage compensation needs to be performed, compared with the voltage compensation solution in FIG. 1, because the compensating voltage in this solution is calculated by the power supply circuit of each phase, the compensating voltage not only better matches a circuit environment of the power supply circuit of each phase, but also allows the power supply circuit of each phase not to receive a compensating voltage calculated by a power supply circuit of another phase. In this way, in this solution, a quantity of sensitive signals transmitted can be reduced, thereby reducing complexity of wiring between power supply circuits of different phases. In addition, a problem that voltage compensation in a power supply circuit is inaccurate due to noise interference occurring during transmission of a compensating voltage can be avoided, thereby improving accuracy of voltage compensation in the power supply circuit of each phase.

In an optional implementation, when a value of K is large, the $1^{st}$-phase power supply circuit to the $K^{th}$-phase power supply circuit may be further disposed in at least two power supply chips. The at least two power supply chips may be disposed in parallel, to reduce space occupied by the power supply chips as much as possible, and reduce development costs of the multiphase power supply. In this embodiment of this application, a same quantity of power supply circuits or different quantities of power supply circuits may be disposed in all of the at least two power supply chips. This is not limited. For example, in a possible case, power supply circuits of every two phases may be disposed in one power supply chip. For example, when K is an even number, the $1^{st}$-phase power supply circuit and the $2^{nd}$-phase power supply circuit are disposed in a $1^{st}$ power supply chip, the $3^{rd}$-phase power supply circuit and the $4^{th}$-phase power supply circuit are disposed in a $2^{nd}$ power supply chip, ..., and the $(K - 1)^{th}$-phase power supply circuit and the $K^{th}$-phase power supply circuit are disposed in a $(K/2)^{th}$ power supply chip. Alternatively, when K is an odd number, the $1^{st}$-phase power supply circuit and the $2^{nd}$-phase power supply circuit are disposed in a $1^{st}$ power supply chip, the $3^{rd}$-phase power supply circuit and the $4^{th}$-phase power supply circuit are disposed in a $2^{nd}$ power supply chip, ..., the $(K - 2)^{th}$-phase power supply circuit and the $(K - 1)^{th}$-phase power supply circuit are disposed in a $((K - 1)/2)^{th}$ power supply chip, and the $K^{th}$-phase power supply circuit is disposed in a $((K + 1)/2)^{th}$ power supply chip. In this way, the multiphase power supply circuits are evenly deployed in different power supply chips, so that power consumption of the power supply chips is more balanced, a service life of the power supply chips is increased, and wires of the power supply chips can also be evenly deployed.

In an optional implementation, the power supply circuits of the K phases may include one primary-phase power supply circuit and K - 1 secondary-phase power supply circuits. The primary -phase power supply circuit may be a power supply circuit of any phase in the power supply circuits of the K phases; or may be a power supply circuit of a phase with best element performance in the power supply circuits of the K phases, for example, a power supply circuit of a phase in which noise interference is the smallest or an equivalent resistance value of an element is the smallest. Correspondingly, the K - 1 secondary-phase power supply circuits are power supply circuits of K - 1 phases other than the primary-phase power supply circuit in the power supply circuits of the K phases. As shown in FIG. 2, assuming that the $1^{st}$-phase power supply circuit is the primary -phase power supply circuit and the $2^{nd}$-phase to the $K^{th}$-phase power supply circuits are the K - 1 secondary-phase power supply circuits, the $1^{st}$-phase power supply circuit may further include a current sampling end ($A_{15}$), and a power supply circuit of each phase in the $2^{nd}$-phase to the $K^{th}$-phase power supply circuits may further include a third feedback end, for example, the $2^{nd}$-phase power supply circuit includes a third feedback end ($A_{25}$), the $3^{rd}$-phase power supply circuit includes a third feedback end ($A_{35}$), ..., the $i^{th}$-phase power supply circuit includes a third feedback end ($A_{i5}$), ..., the $(K - 1)^{th}$-phase power supply circuit includes a third feedback end ($A_{(K - 1)5}$), and the $K^{th}$-phase power supply circuit includes a third feedback end ($A_{K5}$). In this case, the power supply circuit of each phase in the $2^{nd}$-phase to the $K^{th}$-phase power supply circuits may further implement current equalization compensation by using the third feedback end of the power supply circuit of each phase and the current sampling end $A_{15}$ of the $1^{st}$-phase power supply circuit. A specific implementation process is as follows:

The $1^{st}$-phase power supply circuit may further sample a load current signal at an output end of the $1^{st}$-phase power supply circuit based on a second sampling ratio, and transmit, by using the current sampling end $A_{15}$, the sampled load current signal at the output end of the $1^{st}$-phase power supply circuit to the third feedback end of the power supply circuit of each phase in the $2^{nd}$-phase power supply circuit to the $K^{th}$-phase power supply circuit. Correspondingly, the power supply circuit of each phase in the $2^{nd}$-phase power supply circuit to the $K^{th}$-phase power supply circuit may further sample a load current signal at an output end of the power supply circuit of the phase based on the second sampling ratio; obtain the load current signal at the output end of the $1^{st}$-phase power supply circuit by using a third feedback end of the power supply circuit of the phase; calculate, based on the load current signal at the output end of the $1^{st}$ phase power supply circuit and the load current signal at the output end of the power supply circuit of the phase, a current equalization compensating voltage corresponding to the power supply circuit of the phase; and then determine, based on the current equalization compensating voltage corresponding to the power supply circuit of the phase, the load voltage, and the reference voltage, whether voltage compensation needs to be performed in the power supply circuit of the phase. A specific implementation of how to perform voltage compensation based on the three pieces of information is described in the following embodiments, and is not described herein.

In this embodiment of this application, the second sampling ratio may be set by a person skilled in the art based on experience. For example, when a value of the load current signal is greater than a large threshold (for example, 1 V), the second sampling ratio may be set to a real number greater than 0 and not greater than 1. In this way, the load current signal used for calculating the current equalization compensating voltage does not go beyond a limit range of the power supply circuit, and a calculation process for the current equalization compensating voltage is simplified. Correspondingly, when a value of the load current signal is less than a small threshold (for example, 10 mV, where mV is millivolt), the second sampling ratio may be set to a real number greater than 1. In this way, a load current signal of the primary-phase power supply circuit and a load current signal of the secondary-phase power supply circuit both fall within an appropriate range, so that the current equalization compensating voltage can be more accurately calculated based on a difference between the two load current signals. Certainly, when a value of the load current signal is not less than the small threshold and not greater than the large threshold, the second sampling ratio may be alternatively set to 1.

In the foregoing implementation, each secondary-phase power supply circuit can further perform current equalization compensation in real time based on a load current of the primary-phase power supply circuit. In this way, each secondary-phase power supply circuit can control its respective load current to quickly approach the load current of the primary -phase power supply circuit, so that power supply circuits of different phases have consistent load characteristics.

The foregoing content describes a process of signal transmission between power supply circuits of different phases in the multiphase power supply circuits from a perspective of a circuit connection relationship. The following describes a circuit structure of a power supply circuit of each phase. The following embodiments provide descriptions by using an example in which multiphase power supply circuits include a primary -phase power supply circuit and a secondary-phase power supply circuit. When the multiphase power supply circuits include two or more secondary-phase power supply circuits, for a structure of each secondary-phase power supply circuit, refer to the following content. This is not described in detail in this application.

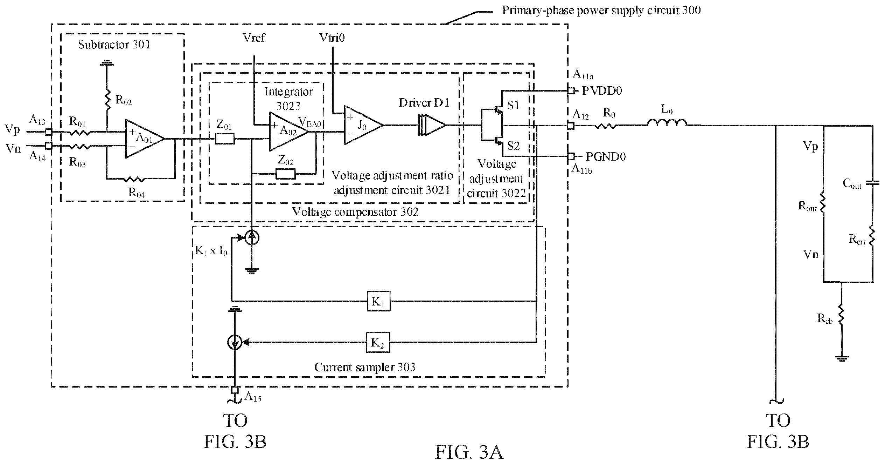

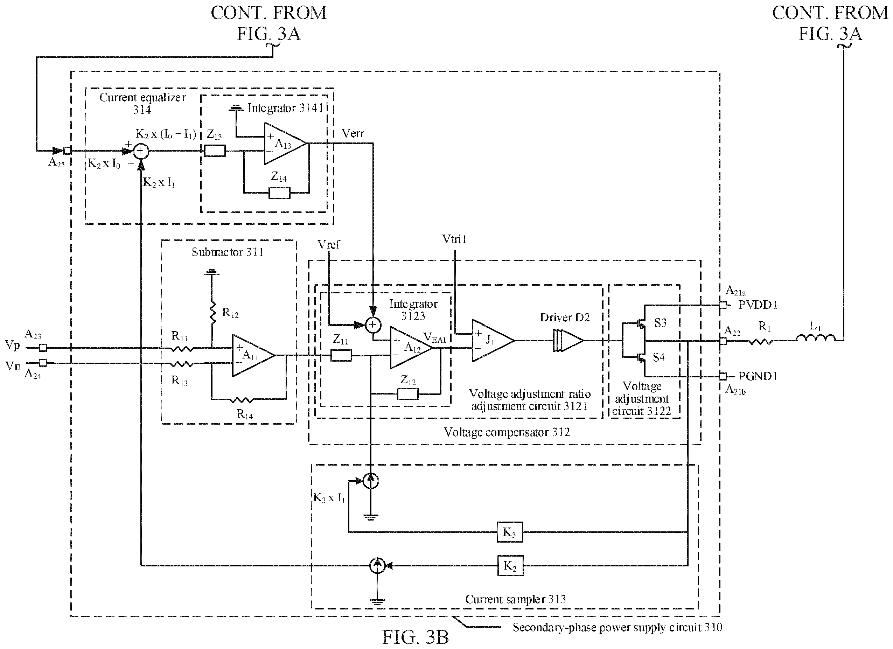

FIG. 3A and FIG. 3B are a schematic diagram of a circuit structure of a multiphase power supply according to an embodiment of this application. As shown in FIG. 3A and FIG. 3B, the multiphase power supply includes a primary-phase power supply circuit 300 and a secondary-phase power supply circuit 310. The primary-phase power supply circuit 300 may correspond to the $1^{st}$-phase power supply circuit in FIG. 2, and the secondary-phase power supply circuit 310 may correspond to the $2^{nd}$-phase power supply circuit in FIG. 2. The primary-phase power supply circuit 300 and the secondary-phase power supply circuit 310 may be disposed in one power supply chip or different power supply chips.

The following first describes a circuit structure of the primary-phase power supply circuit 300.

In an optional implementation, the primary -phase power supply circuit 300 may include a subtracter 301 and a voltage compensator 302. Afirst input end of the subtracter 301 is connected to a first feedback end $A_{13}$ of the primary-phase power supply circuit 300. A second input end of the subtracter 301 is connected to a second feedback end $A_{14}$ of the primary -phase power supply circuit 300. An output end of the subtracter 301 is connected to a first input end of the voltage compensator 302. A second input end of the voltage compensator 302 is configured to receive a reference voltage signal (Vref). An output end of the voltage compensator 302 is connected to an output end $A_{12}$ of the primary-phase power supply circuit 300. The voltage compensator 302 may further include a power supply end. The power supply end is connected to input ends ($A_{11a}$ and $A_{11b}$) of the primary -phase power supply circuit. The voltage compensator 302 may first receive, by using the power supply end of the voltage compensator 302, an input electrical signal input to the primary-phase power supply circuit 300, and then adjust the input electrical signal based on a specified voltage adjustment ratio corresponding to the primary-phase power supply circuit 300 to obtain an output voltage signal, and output the output voltage signal to a first end of a load device (Rout) by using the output end of the voltage compensator 302, to supply power to the load device Rout. Correspondingly, in a process in which the voltage compensator 302 supplies power to the load device Rout, the subtracter 301 may further obtain a first voltage signal (Vp) at the first end of the load device Rout by using the first input end of the subtracter 301, obtain a second voltage signal (Vn) at a second end of the load device (Rout) by using the second input end of the subtracter 301, calculate a difference between the first voltage signal Vp and the second voltage signal Vn to obtain a load voltage, namely, Vp - Vn, at the two ends of the load device Rout, and output the load voltage Vp - Vn to the first input end of the voltage compensator 302 by using the output end of the subtracter 301. Correspondingly, the voltage compensator 302 may receive the load voltage Vp - Vn by using the first input end of the voltage compensator 302, obtain the reference voltage (Vref) by using the second input end of the voltage compensator 302, and determine whether the load voltage Vp - Vn is equal to the reference voltage Vref. If the load voltage Vp - Vn is equal to the reference voltage Vref, processing may not be performed. If the load voltage Vp - Vn is not equal to the reference voltage Vref, a compensating voltage may be determined based on the load voltage Vp - Vn and the reference voltage Vref, and further, the specified voltage adjustment ratio corresponding to the primary -phase power supply circuit 300 is adjusted based on the compensating voltage. In this way, the voltage compensator 302 may subsequently adjust, by using an adjusted specified voltage adjustment ratio, the input electrical signal received by the voltage compensator 302, to adjust the output electrical signal correspondingly provided by the primary-phase power supply circuit 300 for the load device Rout.

In this embodiment of this application, a circuit structure of the subtracter 301 may have a plurality of possibilities. For example, the subtracter 301 may be a subtracter including a reverse addition circuit, or may be a subtracter including a differential circuit. This is not limited. For example, as shown in FIG. 3A and FIG. 3B, the subtracter 301 may include a first operational amplifier ($A_{01}$), a first resistance element ($R_{01}$), a second resistance element ($R_{02}$), a third resistance element ($R_{03}$), and a fourth resistance element ($R_{04}$). Resistance values of the resistance element $R_{01}$ and the resistance element $R_{02}$ may be the same, and resistance values of the resistance element $R_{03}$ and the resistance element $R_{04}$ may be the same. A positive input end of the operational amplifier $A_{01}$ may be connected to the first feedback end $A_{13}$ of the primary-phase power supply circuit 300 by using the resistance element $R_{01}$. The positive input end of the operational amplifier $A_{01}$ may be further connected to a grounding circuit by using the resistance element $R_{02}$. A negative input end of the operational amplifier $A_{01}$ may be connected to the second feedback end $A_{14}$ of the primary -phase power supply circuit 300 by using the resistance element $R_{03}$. The negative input end of the operational amplifier $A_{01}$ may be further connected to an output end of the operational amplifier $A_{01}$ by using the resistance element $R_{04}$. The output end of the operational amplifier $A_{01}$ is connected to the first input end of the voltage compensator 302. In this case, the first voltage signal Vp input from the first feedback end $A_{13}$ of the primary-phase power supply circuit 300 to the primary-phase power supply circuit 300 is connected to the grounding circuit by using the resistance element $R_{01}$ and the resistance element $R_{02}$ that are connected in series. Therefore, a voltage at the positive input end of the operational amplifier $A_{01}$ may be calculated based on the following formula (1.1):

$$V_{A01+} = \frac{Vp}{R_{01} + R_{02}} * R_{02} \ldots \tag{1.1}$$

where
$V_{A01+}$ is the voltage at the positive input end of the operational amplifier $A_{01}$.

When the resistance values of the resistance element $R_{01}$ and the resistance element $R_{02}$ are the same, the voltage at the positive input end of the operational amplifier $A_{01}$ is Vp/2. Based on a characteristic that the positive input end and the negative input end of the operational amplifier $A_{01}$ have a same voltage, it can be learned that a voltage at the negative input end of the operational amplifier $A_{01}$ is also Vp/2. In this way, a current at the negative input end of the operational amplifier $A_{01}$ may be calculated based on the second voltage signal Vn input from the second feedback end $A_{14}$ of the primary-phase power supply circuit 300 to the primary-phase power supply circuit 300 and the voltage Vp/2 at the negative input end of the operational amplifier $A_{01}$, and based on the following formula (1.2):

$$A_{A01-} = \frac{Vn - \dfrac{Vp}{2}}{R_{03}} \cdots \qquad (1.2),$$

where

$A_{A01-}$ is the current at the negative input end of the operational amplifier $A_{01}$.

A voltage at the output end of the operational amplifier $A_{01}$ may be calculated based on a characteristic that no current flows through the operational amplifier $A_{01}$, and based on the following formula (1.3):

$$V_{A01} = \frac{Vp}{2} - \frac{Vn - \dfrac{Vp}{2}}{R_{03}} * R_{04} \cdots \qquad (1.3),$$

where $V_{A01}$ is the voltage at the output end of the operational amplifier $A_{01}$.

It can be learned from the formula (1.3) that, when the resistance values of the resistance element $R_{03}$ and the resistance element $R_{04}$ are the same, the voltage at the output end of the operational amplifier $A_{01}$ is Vp - Vn. Obviously, the resistance values of the resistance element $R_{01}$ and the resistance element $R_{02}$ are set to be the same, and the resistance values of the resistance element $R_{03}$ and the resistance element $R_{04}$ are set to be the same, so that a circuit including the operational amplifier $A_{01}$, the resistance element $R_{01}$, the resistance element $R_{02}$, the resistance element $R_{03}$, and the resistance element $R_{04}$ can implement a function of the subtracter.

In an optional implementation, the voltage compensator 302 may include a voltage adjustment ratio adjustment circuit 3021 and a voltage adjustment circuit 3022. A first input end of the voltage adjustment ratio adjustment circuit 3021 is connected to the first input end of the voltage compensator 302. A second input end of the voltage adjustment ratio adjustment circuit 3021 is connected to the second input end of the voltage compensator 302. An output end of the voltage adjustment ratio adjustment circuit 3021 is connected to a control end of the voltage adjustment circuit 3022. An input end of the voltage adjustment circuit 3022 is connected to the power supply end of the voltage compensator 302. An output end of the voltage adjustment circuit 3022 is connected to the output end of the voltage compensator 302. The voltage adjustment circuit 3022 may obtain, from the input end of the voltage adjustment circuit 3022, the input electrical signal corresponding to the primary-phase power supply circuit 300, adjust, based on a specified voltage adjustment ratio of the voltage adjustment circuit 3022, the input electrical signal corresponding to the primary-phase power supply circuit 300 to obtain the output electrical signal corresponding to the primary-phase power supply circuit 300, and provide the output electrical signal corresponding to the primary-phase power supply circuit 300 for the load device by using the output end of the voltage adjustment circuit 3022. In a voltage adjustment process of the voltage adjustment circuit 3022, the voltage adjustment ratio adjustment circuit 3021 may obtain, by using the first input end of the voltage adjustment ratio adjustment circuit 3021, the load voltage Vp - Vn output by the subtracter 301 and obtain the reference voltage Vref by using the second input end of the voltage adjustment ratio adjustment circuit 3021. If the load voltage Vp - Vn is not equal to the reference voltage Vref, the specified voltage adjustment ratio of the voltage adjustment circuit 3022 is adjusted.

In this embodiment of this application, the specified voltage adjustment ratio of the voltage adjustment circuit 3022 is a ratio of an input voltage of the voltage adjustment circuit 3022 to an output voltage of the voltage adjustment circuit 3022. The following separately describes a case in which the voltage adjustment ratio adjustment circuit 3021 adjusts the specified voltage adjustment ratio when the voltage adjustment circuit 3022 performs boosting or bucking.

When the specified voltage adjustment ratio is a real number greater than 1 (for example, 5:1), the voltage adjustment circuit 3022 is configured to perform buck processing on the input voltage. In this case, if a difference between the load voltage Vp - Vn and the reference voltage Vref is greater than 0, it indicates that the load voltage is greater than the reference voltage. In this case, the output voltage needs to be reduced. Therefore, the voltage adjustment ratio adjustment circuit 3021 may increase the specified voltage adjustment ratio (for example, the voltage adjustment ratio is adjusted to 6:1). If a difference between the load voltage Vp - Vn and the reference voltage Vref is less than 0, it indicates that the load voltage is less than the reference voltage. In this case, the output voltage needs to be increased. Therefore, the voltage adjustment ratio adjustment circuit 3021 may reduce the specified voltage adjustment ratio (for example, the voltage adjustment ratio is adjusted to 4:1).

When the specified voltage adjustment ratio is a positive real number not greater than 1 (for example, 1:5), the voltage adjustment circuit 3022 is configured to perform boost processing on the input voltage. In this case, if a difference between the load voltage Vp - Vn and the reference voltage Vref is greater than 0, it indicates that the load voltage is greater than the reference voltage. In this case, the output voltage needs to be reduced. Therefore, the voltage adjustment ratio adjustment circuit 3021 may increase the specified voltage adjustment ratio (1:4). If a difference between the load voltage Vp - Vn and the reference voltage Vref is less than 0, it indicates that the load voltage is less than the reference voltage. In this case, the output voltage needs to be increased. Therefore, the voltage adjustment ratio adjustment circuit 3021 may reduce the specified voltage adjustment ratio (1:6).

For example, as shown in FIG. 3A and FIG. 3B, the voltage adjustment ratio adjustment circuit 3021 may include a first integrator (3023), a comparator ($J_0$) and a driver (D 1), and the voltage adjustment circuit 3022 may include a switch circuit. The switch circuit includes at least one switching transistor, for example, a switching transistor S1 and a switching transistor S2 shown in FIG. 3A and FIG. 3B. A first input end of the integrator 3023 is connected to the first input end of the voltage adjustment ratio adjustment circuit 3021. A second input end of the integrator 3023 is connected to the second input end of the voltage adjustment ratio adjustment circuit 3021. An output end of the integrator 3023 is connected to a negative input end of the comparator $J_0$. A positive input end of the comparator $J_0$ is configured to receive a phase-staggered triangular wave signal (Vtri0) corresponding to the primary-phase power supply circuit 300. An output end of the comparator $J_0$ is connected to an input end of the driver D 1. An output end of the driver D1 is connected to the control end of the voltage adjustment circuit 3022. A control electrode of the switching transistor S1 and a control electrode of the switching transistor S2 are connected to the control end of the voltage adjustment circuit 3022. A first electrode of the switching transistor S1 is connected to the input end $A_{11a}$ of the primary-phase power supply circuit 300. The primary-phase power supply circuit 300 receives an input electrical signal PVDD0 by using the input end $A_{11a}$. A second electrode of the switching transistor S1 is connected to a first electrode of the switching transistor S2. A second electrode of the switching transistor S2 is connected to the input end $A_{11b}$ of the primary -phase power supply circuit 300. The primary -phase power supply circuit 300 receives an input electrical signal PGND0 by using the input end $A_{11b}$. The second electrode of the switching transistor S1 (or the first electrode of the switching transistor S2) is further connected to the output end of the voltage adjustment circuit 3022.

In specific implementation, the integrator 3023 may obtain an instantaneous load voltage Vp - Vn by using the first input end of the integrator 3023, obtain an instantaneous reference voltage Vref by using the second input end of the integrator 3023, calculate a difference between the instantaneous load voltage Vp - Vn and the instantaneous reference voltage Vref to obtain an instantaneous compensating voltage, and then perform integration on the instantaneous compensating voltage to obtain a compensating voltage ($V_{EA0}$), and finally, output the compensating voltage $V_{EA0}$ to the negative input end of the comparator $J_0$. Correspondingly, the comparator $J_0$ may obtain, by using the positive input end of the comparator $J_0$, the phase-staggered triangular wave signal Vtri0 corresponding to the primary-phase power supply circuit 300, obtain the compensating voltage $V_{EA0}$ by using the negative input end of the comparator $J_0$, compare the compensating voltage $V_{EA0}$ with the phase-staggered triangular wave signal Vtri0 to obtain a control square wave signal corresponding to the primary -phase power supply circuit 300, and output, to the input end of the driver D1, the control square wave signal corresponding to the primary-phase power supply circuit 300. In this way, the driver D 1 can control, based on the control square wave signal corresponding to the primary -phase power supply circuit 300, the switching transistor S1 and the switching transistor S2 to be switched on or switched off, and adjust switching-on duration and switching-off duration of the switching transistor S1 and the switching transistor S2 to adjust the specified voltage adjustment ratio of the voltage adjustment circuit 3022.

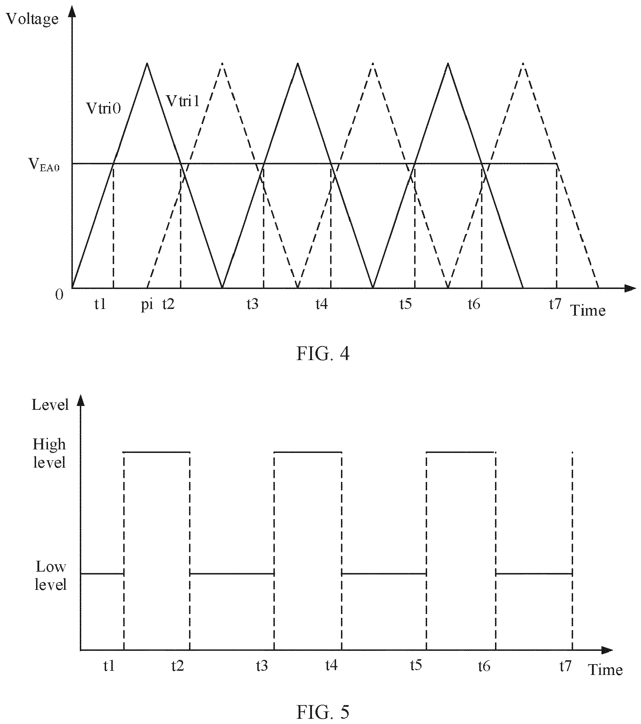

The following uses a specific example for description. FIG. 4 is an example diagram of a waveform of the phase-staggered triangular wave signal Vtri0 corresponding to the primary -phase power supply circuit 300. As shown in FIG. 4, the phase-staggered triangular wave signal Vtri0 may be a continuous isosceles triangle in waveform display, and the compensating voltage $V_{EA0}$ may be a straight line in waveform display. When the control square wave signal is generated through transformation based on the phase-staggered triangular wave signal Vtri0 and the compensating voltage $V_{EA0}$, a triangular wave region, of a waveform of the phase-staggered triangular wave signal Vtri0, that is located above the straight line corresponding to the compensating voltage $V_{EA0}$ corresponds to a logic high level; and a triangular wave region, of the waveform of the phase-staggered triangular wave signal Vtri0, that is located below the straight line corresponding to the compensating voltage $V_{EA0}$ corresponds to a low logic level. In this way, the control square wave signal shown in FIG. 5 can be obtained based on the phase-staggered triangular wave signal Vtri0 and the compensating voltage $V_{EA0}$. As shown in FIG. 5, a time period of t1 to t2, a time period of t3 to t4, and a time period of t5 to t6 correspond to a high logic level, and a time period of 0 to t1, a time period of t2 to t3, and a time period of t4 to t5 correspond to a low logic level. Therefore, the driver D 1 may switch on the switching transistor S 1 and switch off the switching transistor S2 in the time period of t1 to t2, the time period of t3 to t4, and the time period of t5 to t6, to charge an inductance element $L_0$ by using PVDD0; and switch on the switching transistor S2 and switch off the switching transistor S 1 in the time period of 0 to t1, the time period of t2 to t3, and the time period of t4 to t5, to perform freewheeling for the inductance element $L_0$ by using PGND0. In this way, when a value of the compensating voltage $V_{EA0}$ varies, the time period of 0 to t1, the time period of t2 to t3, the time period of t4 to t5, the time period of t1 to t2, the time period of t3 to t4, and the time period of t5 to t6 also corresponds to different duration. In this case, a ratio of the switching-on duration of the switching transistor S1 and the switching transistor S2 to the switching-off duration of the switching transistor S 1 and the switching transistor S2 also varies. The switching-on duration of the switching transistor S1 and the switching transistor S2 can be controlled to control duty cycles of the switching transistor S1 and the switching transistor S2, to change the specified voltage adjustment ratio of the voltage adjustment circuit 3022.

It can be understood that the foregoing manner of switching on the switching transistor S1 and/or the switching transistor S2 is merely a possible example for describing the solution, and the control manner does not necessarily need to be performed in this application. For example, in another control manner, alternatively, the driver D 1 may switch on the switching transistor S2 and switch off the switching transistor S1 in the time period of t1 to t2, the time period of t3 to t4, and the time period of t5 to t6, to perform freewheeling for the inductance element $L_0$ by using PGND0; and switch on the switching transistor S1 and switch off the switching transistor S2 in the time period of 0 to t1, the time period of t2 to t3, and the time period of t4 to t5, to charge the inductance element $L_0$ by using PVDD0. This is not limited in this application.

In this embodiment of this application, a circuit structure of the integrator 3023 may have a plurality of possibilities. For example, the integrator 3023 may be an RC circuit including a resistor and a capacitor, or may be an integrator including an operational amplifier and an RC circuit. This is not limited. For example, as shown in FIG. 3A and FIG. 3B, the integrator 3023 may include a second operational amplifier ($A_{02}$), a first impedance element ($Z_{01}$), and a second impedance element ($Z_{02}$). A first end of the impedance element $Z_{01}$ is connected to the first input end of the integrator 3023. A second end of the impedance element $Z_{01}$ is separately connected to a negative input end of the operational amplifier $A_{02}$ and a first end of the impedance element $Z_{02}$. A second end of the impedance element $Z_{02}$ is connected to an output end of the operational amplifier $A_{02}$. A positive input end of the operational amplifier $A_{02}$ is connected to the second input end of the integrator 3023. When the impedance element $Z_{01}$ is a resistor and the impedance element $Z_{02}$ is a capacitor, an input voltage of the operational amplifier $A_{02}$ is the instantaneous compensating voltage calculated by using the instantaneous load voltage Vp - Vn input by the subtracter 301 to the integrator 3023 and the instantaneous reference voltage Vref. The instantaneous compensating voltage is used to charge the impedance element $Z_{02}$, so that an output voltage of the impedance element $Z_{02}$ is a compensating voltage $V_{EA0}$ obtained by performing integration on the instantaneous compensating voltage. For a process of implementing integration by the integrator, refer to a conventional technology. Details are not described in this application.

In an optional implementation, the primary-phase power supply circuit 300 may further include a current sampler 303. An input end of the current sampler 303 is connected to the output end $A_{12}$ of the primary -phase power supply circuit 300. A first output end of the current sampler 303 is connected to the negative input end of the operational amplifier $A_{02}$. The current sampler 303 may obtain, from the input end of the current sampler 303 based on a specified sampling frequency, a load current signal ($I_0$) output by the primary -phase power supply circuit 300, sample the load current signal by using a first sampling ratio ($K_1$), and output a sampled load current signal ($K_1 \times I_0$) by using the first output end of the current sampler 303. In this case, based on a characteristic that no current flows through the operational amplifier $A_{02}$, the sampled load current signal $K_1 \times I_0$ is output to the output end of the subtracter 301 through the impedance element $Z_{01}$. In this way, based on a characteristic that a voltage at the negative input end of the operational amplifier $A_{02}$ is equal to a voltage Vref at the positive input end of the operational amplifier $A_{02}$, a voltage at the output end of the subtracter 301, that is, a load voltage Vp - Vn, may be calculated based on the following formula (1.4):

$$V_{A01} = Vp - Vn = Vref - K_1 * I_0 * Z_{01} \dots \qquad (1.4),$$

where

$I_0$ is a load current at the output end of the primary -phase power supply circuit. It can be learned based on the formula (1.4) that, in the primary-phase power supply circuit 300, the load voltage Vp - Vn is in a linear correlation relationship with the load current $I_0$ at the output end of the primary-phase power supply circuit 300, and a slope of the linear correlation relationship is $K_1 \times Z_{01}$.

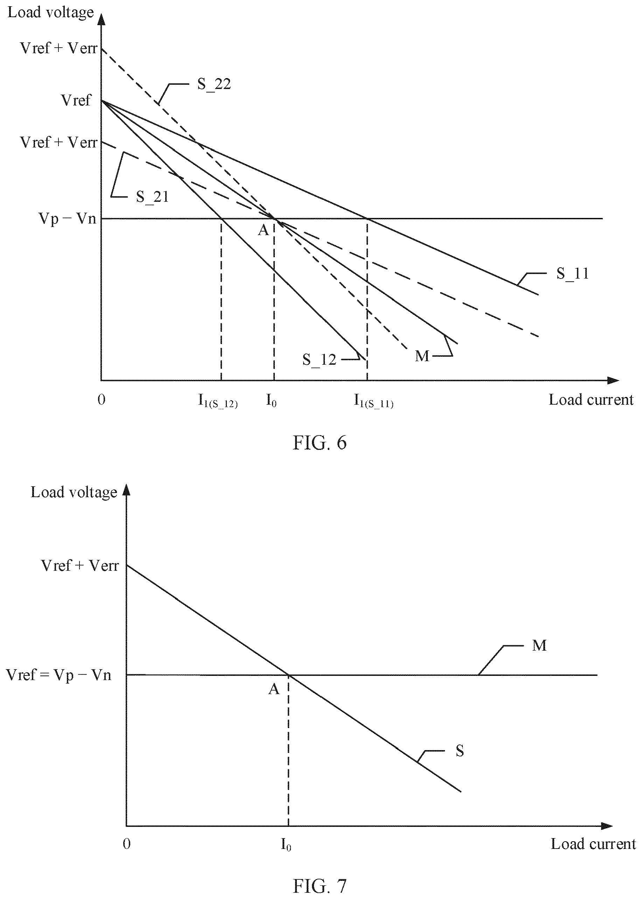

FIG. 6 is an example diagram of load characteristics of power supply circuits of different phases. A straight line corresponding to M is used to indicate the linear correlation relationship between the load current and the load voltage at the output end of the primary-phase power supply circuit 300. It can be learned that, when the load current at the output end of the primary-phase power supply circuit 300 is 0, the load voltage Vp - Vn is the same as the reference voltage Vref, and as the load current at the output end of the primary-phase power supply circuit 300 gradually increases, the load voltage Vp - Vn decreases linearly based on the slope of $K_1 \times Z_{01}$. The straight line may be referred to as a loadline (loadline) corresponding to the primary -phase power supply circuit 300. In this embodiment of this application, the current sampler is disposed in the primary-phase power supply circuit, so that the primary-phase power supply circuit can adaptively adjust the load voltage based on a change of the load current at the output end of the primary-phase power supply circuit, to implement adaptive voltage positioning of the primary-phase power supply circuit, thereby helping achieve an objective of load balancing of the primary-phase power supply circuit.

For example, the multiphase power supply may further include an output end controller (not shown in FIG. 3A and FIG. 3B). The output end controller may be a software controller, for example, a sampling end instruction; or may be a circuit component disposed in the multiphase power supply, for example, including a switch disposed between the input end and the first output end of the current sampler 303. The output controller may be configured to:

turn on the first output end of the current sampler 303, so that the primary-phase power supply circuit 300 adjusts the load voltage based on the load current output by the first output end of the current sampler 303, to implement adaptive voltage positioning of the primary-phase power supply circuit 300; or
turn off the first output end of the primary-phase current sampler 303, so that the primary-phase power supply circuit 300 adjusts the load voltage only based on the reference voltage and does not implement adaptive voltage positioning.

The foregoing content describes the circuit structure of the primary-phase power supply circuit in detail. The following describes a circuit structure of the secondary-phase power supply circuit in detail with reference to the foregoing content.

In this embodiment of this application, the secondary-phase power supply circuit 310 may include a subtracter 311 and a voltage compensator 312. A first input end of the subtracter 311 is connected to a first feedback end $A_{23}$ of the secondary-phase power supply circuit 310. A second input end of the subtracter 311 is connected to a second feedback end $A_{24}$ of the secondary-phase power supply circuit 310. An output end of the subtracter 311 is connected to a first input end of the voltage compensator 312. A second input end of the voltage compensator 312 is configured to obtain a reference voltage Vref. An output end of the voltage compensator 312 is connected to an output end $A_{22}$ of the secondary-phase power supply circuit 310. The voltage compensator 312 may further include a power supply end. The power supply end is connected to input ends ($A_{21a}$ and $A_{21b}$) of the secondary-phase power supply circuit 310. The voltage compensator 312 may receive, by using the power supply end of the voltage compensator 312, an input voltage signal input to the secondary-phase power supply circuit 310, and may adjust the input voltage signal based on a specified voltage adjustment ratio corresponding to the secondary-phase power supply circuit 310 to obtain an output voltage signal, and output the output voltage signal to the first end of the load device Rout by using the output end of the voltage compensator 312, to supply power to the load device Rout. In a process in which the output voltage signal of the voltage compensator 302 supplies power to the load device Rout, the subtracter 311 may further obtain a first voltage signal Vp at the first end of the load device Rout by using the first input end of the subtracter 311, obtain a second voltage signal Vn at the second end of the load device Rout by using the second input end of the subtracter 311, calculate a difference between the first voltage signal Vp and the second voltage signal Vn to obtain a load voltage Vp - Vn at the two ends of the load device, and output the load voltage Vp - Vn to the first input end of the voltage compensator 312 by using the output end of the subtracter 311. In this case, the voltage compensator 312 may determine whether the load voltage Vp - Vn and the reference voltage Vref are the same; and if the load voltage Vp - Vn and the reference voltage Vref are the same, may not perform processing; or if the load voltage Vp - Vn and the reference voltage Vref are different, may adjust, based on the difference, the specified voltage adjustment ratio corresponding to the secondary-phase power supply circuit 310. In this way, the voltage compensator 312 may subsequently adjust, by using an adjusted specified voltage adjustment ratio, the input voltage signal received by the voltage compensator 312 to obtain an output voltage signal, so that the load voltage Vp - Vn is close to the reference voltage Vref as much as possible.

For example, as shown in FIG. 3A and FIG. 3B, the subtracter 311 may include a first operational amplifier ($A_{11}$), a first resistance element ($R_{11}$), a second resistance element ($R_{12}$), a third resistance element ($R_{13}$), and a fourth resistance element ($R_{14}$). Resistance values of the resistance element $R_{11}$ and the resistance element $R_{12}$ may be the same, and resistance values of the resistance element $R_{13}$ and the resistance element $R_{14}$ may be the same. A positive input end of the operational amplifier $A_{11}$ may be connected to the first feedback end $A_{23}$ of the secondary-phase power supply circuit 310 by using the resistance element $R_{11}$. The positive input end of the operational amplifier $A_{11}$ may be further connected to the grounding circuit by using the resistance element $R_{12}$. A negative input end of the operational amplifier $A_{11}$ may be connected to the second feedback end $A_{24}$ of the secondary-phase power supply circuit 310 by using the resistance element $R_{13}$. The negative input end of the operational amplifier $A_{11}$ may be further connected to an output end of the operational amplifier $A_{11}$ by using the resistance element $R_{14}$. In this case, a circuit including the operational amplifier $A_{11}$, the resistance element $R_{11}$, the resistance element $R_{12}$, the resistance element $R_{13}$, and the resistance element $R_{14}$, can calculate a difference between a first voltage signal Vp obtained by the first input end of the subtracter 311 and a second voltage signal Vn obtained by the second input end of the subtracter 311 to obtain the load voltage Vp - Vn at the two ends of the load device Rout. For a specific implementation of implementing a subtraction function, refer to the descriptions of the subtracter 301 in the primary-phase power supply circuit 300.

Details are not described herein again.

In an optional implementation, the voltage compensator 312 may include a voltage adjustment ratio adjustment circuit 3121 and a voltage adjustment circuit 3122. A first input end of the voltage adjustment ratio adjustment circuit 3121 is connected to the first input end of the voltage compensator 312. A second input end of the voltage adjustment ratio adjustment circuit 3121 is connected to the second input end of the voltage compensator 312. An output end of the voltage adjustment ratio adjustment circuit 3121 is connected to a control end of the voltage adjustment circuit 3122. An input end of the voltage adjustment circuit 3122 is connected to the power supply end of the voltage compensator 312. An output end of the voltage adjustment circuit 3122 is connected to the output end of the voltage compensator 312. The voltage adjustment circuit 3122 may obtain, from the input end of the voltage adjustment circuit 3122, the input electrical signal corresponding to the secondary -phase power supply circuit 310, adjust the input electrical signal based on a specified voltage adjustment ratio of the voltage adjustment circuit 3122 to obtain the output electrical signal corresponding to the secondary -phase power supply circuit 310, and provide the output electrical signal corresponding to the secondary-phase power supply circuit 310 for the load device by using the output end of the voltage adjustment circuit 3122. In a voltage adjustment process of the voltage adjustment circuit 3122, the voltage adjustment ratio adjustment circuit 3121 may further obtain, by using the first input end of the voltage adjustment ratio adjustment circuit 3121, the load voltage $Vp - Vn$ output by the subtracter 311, and obtain the reference voltage Vref by using the second input end of the voltage adjustment ratio adjustment circuit 3121. If the load voltage $Vp - Vn$ is not equal to the reference voltage Vref, the specified voltage adjustment ratio of the voltage adjustment circuit 3122 is adjusted. For a specific implementation of adjusting the specified voltage adjustment ratio, refer to the descriptions of the primary-phase power supply circuit 300. Details are not described herein again.

For example, as shown in FIG. 3A and FIG. 3B, the voltage adjustment ratio adjustment circuit 3121 may include a first integrator (3123), a comparator (Ji) and a driver (D2), and the voltage adjustment circuit 3122 may include a switched capacitor. The switched capacitor includes at least one second switching transistor, for example, a switching transistor S3 and a switching transistor S4 shown in FIG. 3A and FIG. 3B. A first input end of the integrator 3123 is connected to the first input end of the voltage adjustment ratio adjustment circuit 3121. A second input end of the integrator 3123 is connected to the second input end of the voltage adjustment ratio adjustment circuit 3121. An output end of the integrator 3123 is connected to a negative input end of the comparator Ji. A positive input end of the comparator Ji is configured to receive a phase-staggered triangular wave signal (Vtri1) corresponding to the secondary-phase power supply circuit 310. An output end of the comparator Ji is connected to an input end of the driver D2. An output end of the driver D2 is connected to the control end of the voltage adjustment circuit 3122. A control electrode of the switching transistor S3 and a control electrode of the switching transistor S4 are separately connected to the control end of the voltage adjustment circuit 3122. A first electrode of the switching transistor S3 is connected to the input end $A_{21a}$ of the voltage adjustment circuit 3122. The input end $A_{21a}$ of the voltage adjustment circuit 3122 is configured to receive an input electrical signal PVDD1. A second electrode of the switching transistor S3 is connected to a first electrode of the switching transistor S4. A second electrode of the switching transistor S4 is connected to the input end $A_{21b}$ of the voltage adjustment circuit 3122. The input end $A_{21b}$ of the voltage adjustment circuit 3122 is configured to receive an input electrical signal PGND1. The second electrode of the switching transistor S4 (or the first electrode of the switching transistor S4) is further connected to the output end of the voltage adjustment circuit 3122. In this case, the integrator 3123 may obtain an instantaneous load voltage $Vp - Vn$ by using the first input end of the integrator 3123, obtain an instantaneous reference voltage Vref by using the second input end of the integrator 3123, calculate a difference between the instantaneous reference voltage Vref and the instantaneous load voltage $Vp - Vn$ to obtain an instantaneous compensating voltage, and then perform integration on the instantaneous compensating voltage to obtain a compensating voltage $V_{EA1}$, and finally, output the compensating voltage $V_{EA1}$ to the negative input end of the comparator Ji. Correspondingly, the comparator Ji may obtain, by using the positive input end of the comparator Ji, the phase-staggered triangular wave signal Vtri1 corresponding to the secondary-phase power supply circuit 310, obtain the compensating voltage $V_{EA1}$ by using the negative input end of the comparator Ji, compare the compensating voltage $V_{EA1}$ with the phase-staggered triangular wave signal Vtri1 to obtain a control square wave signal corresponding to the secondary-phase power supply circuit 310, and output, to the input end of the driver D2, the control square wave signal corresponding to the secondary-phase power supply circuit 310. In this way, the driver D2 can control, based on the control square wave signal corresponding to the secondary -phase power supply circuit 310, the switching transistor S3 and the switching transistor S4 to be switched on or switched off, and adjust switching-on duration and switching-off duration of the switching transistor S3 and the switching transistor S4 to adjust the specified voltage adjustment ratio of the voltage adjustment circuit 3122.

In this embodiment of this application, phases of phase-staggered triangular wave signals Vtri0 corresponding to power supply circuits of different phases may be different, and a phase difference corresponding to phase-staggered triangular wave signals corresponding to two adjacent power supply circuits may be 2pi divided by a quantity of phases. For example, in the two-phase power supply shown in FIG. 3A and FIG. 3B, a phase difference between the phase-staggered triangular wave signal Vtri1 corresponding to the secondary -phase power supply circuit 310 and the phase-staggered triangular wave signal Vtri0 corresponding to the primary-phase power supply circuit 300 may be pi, as shown in FIG. 4. In this case, the primary-phase power supply circuit 300 may supply power to the load device in a time period of 0 to pi/2, the secondary-phase power supply circuit 310 may supply power to the load device in a time period of pi/2 to pi, and the primary-phase power supply circuit 300 and the secondary-phase power supply circuit 310 may continuously supply power alternately. In this embodiment of this application, for a manner of controlling, by the driver D2, the switching transistor S3 and the switching transistor S4 to be switched on or switched off, refer to the manner of controlling, by the driver D1, the switching transistor S1 and the switching transistor S2 to be switched on or switched off. Details are not described herein again.

For example, as shown in FIG. 3A and FIG. 3B, the integrator 3123 may include a second operational amplifier ($A_{12}$), a first impedance element ($Z_{11}$), and a second impedance element ($Z_{12}$). A first end of the impedance element $Z_{11}$ is connected to the first input end of the integrator 3123. A second end of the impedance element $Z_{11}$ is separately connected to a negative input end of the operational amplifier $A_{12}$ and a first end of the impedance element $Z_{12}$. A second end of the impedance element $Z_{12}$ is connected to an output end of the operational amplifier $A_{12}$. A positive input end of the operational amplifier $A_{12}$ is connected to the second input end of the integrator 3123. When the impedance element $Z_{11}$ is a resistor and the impedance element $Z_{12}$ is a capacitor, the integrator 3123 can charge the impedance element $Z_{12}$ by using the instantaneous compensating voltage, so that an output voltage signal of the impedance element $Z_{12}$ is a compensating voltage $V_{EA1}$ obtained by performing integration on the instantaneous compensating voltage.

In this embodiment of this application, the secondary-phase power supply circuit may alternatively autonomously adjust the output voltage of the secondary-phase power supply circuit based on the load voltage and the reference voltage, and may not need to receive the compensating voltage sent by the primary-phase power supply circuit. This can reduce a quantity of sensitive signals transmitted and improve accuracy of voltage compensation in the secondary-phase power supply circuit, while ensuring that the output voltage of the secondary-phase power supply circuit is close to the reference voltage as much as possible.

In the multiphase power supply shown in FIG. 1, when the primary-phase power supply circuit implements an adaptive voltage positioning function, each secondary-phase power supply circuit needs to collect a load current at an output end of the secondary-phase power supply circuit, and send, by using the I_sens port of the secondary-phase power supply circuit, the load current at the output end of the secondary-phase power supply circuit to the I_shr/I_tot port of the primary-phase power supply circuit. Correspondingly, the primary-phase power supply circuit obtains the load current at the output end of each secondary-phase power supply circuit by using the I_shr/I_tot port, performs summation processing on the load current, and then performs adaptive voltage positioning based on a sum of load currents at output ends of all the secondary-phase power supply circuits. In this manner, because the primary-phase power supply circuit performs adaptive voltage positioning based on the load current at the output end of each secondary-phase power supply circuit, the load current is actually a sensitive signal. However, in this manner, each secondary-phase power supply circuit needs to send the load current to the primary-phase power supply circuit. Therefore, this not only makes wiring between the primary-phase power supply circuit and the secondary-phase power supply circuit complex, but also may cause noise interference to the load current during transmission of the load current. As a result, an offset between a load current received by the primary-phase power supply circuit and the load current sent by the secondary-phase power supply circuit is large, affecting accuracy of adaptive voltage positioning subsequently performed by the primary-phase power supply circuit. In a possible case, adaptive voltage positioning may be performed by using a current value obtained by multiplying the load current at the output end of the primary-phase power supply by a quantity of power supply circuits to prevent each secondary-phase power supply circuit from sending the load current to the primary-phase power supply circuit. However, the load current at the output end of the primary-phase power supply circuit cannot be completely the same as the load current at the output end of each secondary-phase power supply circuit, and cannot indicate an average load current at the output end of each secondary-phase power supply circuit. Especially when a load is transient, the load current at the output end of the primary-phase power supply circuit is greatly different from the load current at the output end of each secondary-phase power supply circuit, and this manner may cause an output voltage of a power supply circuit of each phase to drop greatly or overshoot greatly. Therefore, the manner of performing adaptive voltage positioning by multiplying the load current at the output end of the primary-phase power supply circuit by the quantity of power supply circuits is actually not quite appropriate either.

To resolve the foregoing problem, in an optional implementation, each secondary-phase power supply circuit may autonomously perform respective adaptive voltage compensation, and adaptive voltage compensation is not performed only on a side of the primary-phase power supply circuit. In specific implementation, as shown in FIG. 3A and FIG. 3B, the secondary-phase power supply circuit 310 may further include a current sampler 313, an input end of the current sampler 313 is connected to the output end $A_{22}$ of the secondary-phase power supply circuit 310, and a first output end of the current sampler 313 is connected to the negative input end of the operational amplifier $A_{12}$. The current sampler 313 may obtain a load current signal ($I_1$) at the output end of the secondary-phase power supply circuit 310 from the input end of the current sampler 313 based on a specified sampling frequency, sample the load current signal by using a first sampling ratio ($K_3$), and output a sampled load current signal ($K_3 \times I_1$) by using the first output end of the current sampler 313. In this case, based on a characteristic that no current flows through the operational amplifier $A_{12}$, the sampled load current signal $K_3 \times I_1$ is output to the output end of the subtracter 311 through the impedance element $Z_{11}$. In this way, based on a characteristic that a voltage at the negative input end of the operational amplifier

$A_{12}$ is equal to a voltage Vref at the positive input end of the operational amplifier $A_{12}$, a voltage at the output end of the subtracter 311, that is, a load voltage Vp - Vn, may be calculated by using the following formula (1.5):

$$V_{A11} = Vp - Vn = Vref - K_3 * I_1 * Z_{11} \ldots \tag{1.5},$$

where
$V_{A11}$ is the voltage at the output end of the subtracter 311, and $I_1$ is the load current at the output end of the secondary-phase power supply circuit. It can be learned based on the formula (1.5) that, in the secondary-phase power supply circuit 310, the load voltage Vp - Vn is in a linear correlation relationship with the load current $I_1$ output by the secondary-phase power supply circuit 310, and a slope of the linear correlation relationship is $K_3 \times Z_{11}$.

As shown in FIG. 6, when the load slope $K_3 \times Z_{11}$ corresponding to the secondary-phase power supply circuit 310 is less than the load slope $K_1 \times Z_{01}$ corresponding to the primary-phase power supply circuit 300, a loadline of the secondary -phase power supply circuit 310 is a straight line corresponding to S_11 shown in FIG. 6. When the load slope K3 $\times$ Z11 corresponding to the secondary -phase power supply circuit 310 is greater than the load slope $K_1 \times Z_{01}$ corresponding to the primary-phase power supply circuit 300, a loadline of the secondary -phase power supply circuit 310 is a straight line corresponding to S_12 shown in FIG. 6. It can be learned that, when the load current $I_1$ output by the secondary-phase power supply circuit 310 is 0, the load voltage Vp - Vn is equal to the reference voltage Vref, and as the load current $I_1$ output by the secondary-phase power supply circuit 310 gradually increases, the load voltage Vp - Vn output by the secondary-phase power supply circuit 310 decreases linearly based on the slope of $K_3 \times Z_{11}$.

In the foregoing implementation, the current sampler is disposed in the secondary-phase power supply circuit, so that the secondary -phase power supply circuit can continuously adjust the load voltage based on a change of the load current output by the secondary -phase power supply circuit, to implement adaptive voltage positioning of the secondary-phase power supply circuit, and improve load balancing in the secondary-phase power supply circuit. In addition, in this manner, each secondary -phase power supply circuit does not need to transmit a sensitive signal, for example, the load current, to the primary-phase power supply circuit, and the primary-phase power supply circuit does not need to use, as a sum of currents, a product obtained by multiplying the load current at the output end of the primary -phase power supply circuit by the quantity of power supply circuits either. This not only can reduce complexity of wiring between the primary-phase power supply circuit and the secondary -phase power supply circuit, but also can improve accuracy of adaptive voltage positioning performed by the multiphase power supply.

As shown in FIG. 6, although both the primary-phase power supply circuit and the secondary -phase power supply circuit can perform adaptive voltage positioning, if the load slopes of the primary -phase power supply circuit and the secondary -phase power supply circuit are different, because the loadline of the primary-phase power supply circuit and the loadline of the secondary -phase power supply circuit start from a same point Vref, the load current of the primary-phase power supply circuit and the load current of the secondary-phase power supply circuit are also different. In this case, a load current of a phase may be excessively large, and a load current of another phase may be excessively small, causing unbalanced load characteristics of power supply circuits of different phases. To resolve this problem, the load current of the secondary-phase power supply circuit needs to be close to the load current of the primary-phase power supply circuit as much as possible, to achieve a load balancing effect. The following provides an optional implementation.

As shown in FIG. 3A and FIG. 3B, the secondary-phase power supply circuit 310 may further include a current equalizer 314, a first input end of the current equalizer 314 (namely, the third feedback end $A_{25}$ of the 2nd-phase power supply circuit shown in FIG. 2) is connected to a second output end of the current sampler 303 (namely, the current sampling end $A_{15}$ of the 1st-phase power supply circuit shown in FIG. 2), a second input end of the current equalizer 314 is connected to a second output end of the current sampler 313, and an output end of the current equalizer 314 is connected to the positive input end of the operational amplifier $A_{12}$. After obtaining, from the input end of the current sampler 303 based on the specified sampling frequency, the load current signal $I_0$ output by the primary -phase power supply circuit 300, the current sampler 303 may further sample the load current signal by using a second sampling ratio ($K_2$), and output, by using the second output end of the current sampler 303, a sampled load current signal ($K_2 \times I_0$) corresponding to the primary-phase power supply circuit 300. Correspondingly, after obtaining, from the input end of the current sampler 313 based on the specified sampling frequency, the load current signal $I_1$ output by the secondary-phase power supply circuit 310, the current sampler 313 may further sample the load current signal by using the second sampling ratio $K_2$, and output, by using the second output end of the current sampler 313, a sampled load current signal ($K_2 \times I_1$) corresponding to the secondary -phase power supply circuit 310. In this case, the current equalizer 314 can obtain the load current signal $K_2 \times I_0$ corresponding to the primary-phase power supply circuit 300 from the first input end of the current equalizer 314, obtain the load current signal $K_2 \times I_1$ corresponding to the secondary -phase power supply circuit 310 from the second input end of the current equalizer 314, calculate a current equalization compensating voltage (Verr) based on the load current signal $K_2 \times I_0$ corresponding to the primary-phase power supply circuit 300 and the load current signal $K_2 \times I_1$ corresponding to the secondary-phase power supply circuit 310, and output the current equalization compensating voltage (Verr) to the positive input end of the operational amplifier $A_{12}$ by using the output end of the current equalizer 314. Correspondingly, the operational amplifier $A_{12}$ may further obtain the current equalization compensating voltage Verr and the reference voltage Vref from the positive input end of the operational amplifier $A_{12}$, obtain the load voltage Vp - Vn from the negative input end of the operational amplifier $A_{12}$, and then perform voltage compensation based on the current equalization compensating voltage Verr, the reference voltage Vref, and the load voltage Vp - Vn.

In this embodiment of this application, the current equalization compensating voltage Verr is calculated based on an offset value between the load current of the secondary -phase power supply circuit and the load current of the primary-phase power supply circuit, and is used to indicate a value of a voltage that is required for compensation if the secondary-phase power supply circuit needs to reach the load current of the primary-phase power supply circuit. In this way, voltage compensation is performed on the secondary-phase power supply circuit jointly by using the current equalization compensating voltage Verr, the reference voltage Vref, and the load voltage Vp - Vn, so that the output voltage of the secondary-phase power supply circuit can be close to the reference voltage, and the load current of the secondary-phase power supply circuit can also be close to the load current of the primary-phase power supply circuit. In this way, power supply circuits of all phases have a same load characteristic, thereby preventing a load current of a power supply circuit of a specific phase from being excessively large and causing a failure, and improving power supply stability of the multiphase power supply.

For example, as shown in FIG. 3A and FIG. 3B, the current equalizer 314 may include a first summator and a second integrator (3141). A positive input end of the first summator is connected to the second output end of the current sampler 303. A negative input end of the first summator is connected to the second output end of the current sampler 313. An output end of the first summator is connected to an input end of the integrator 3141. An output end of the integrator 3141 is connected to a positive input end of the integrator 3123. The first summator may obtain, from the positive input end of the first summator, the load current signal $K_2 \times I_0$ corresponding to the primary-phase power supply circuit 300; obtain, from the negative input end of the first summator, the load current signal $K_2 \times I_1$ corresponding to the secondary-phase power supply circuit 310; perform summation processing on the load current signal $K_2 \times I_0$ corresponding to the primary-phase power supply circuit 300 and the load current signal $K_2 \times I_1$ corresponding to the secondary -phase power supply circuit 310 to obtain an instantaneous current equalization compensating current signal $(K_2 \times (I_0 - I_1))$ of the secondary-phase power supply circuit 310 relative to the primary-phase power supply circuit 300; and then output the instantaneous compensating current signal $K_2 \times (I_0 - I_1)$ to the integrator 3141. Correspondingly, the integrator 3141 may perform integration processing on the instantaneous current equalization compensating current signal $K_2 \times (I_0 - I_1)$ to obtain the current equalization compensating voltage Verr.

In this embodiment of this application, a circuit structure of the integrator 3141 may have a plurality of possibilities. For example, the integrator 3141 may be an RC circuit including a resistor and a capacitor, or may be an integrator including an operational amplifier and an RC circuit. This is not limited. For example, as shown in FIG. 3A and FIG. 3B, the integrator 3141 may include a third operational amplifier ($A_{13}$), a third impedance element ($Z_{13}$), and a fourth impedance element ($Z_{14}$). A first end of the impedance element $Z_{13}$ is connected to the output end of the first summator. A second end of the impedance element $Z_{13}$ is separately connected to a negative input end of the operational amplifier $A_{13}$ and a first end of the impedance element $Z_{14}$. A positive input end of the operational amplifier $A_{13}$ is connected to the grounding circuit. A second end of the impedance element $Z_{14}$ is connected to an output end of the operational amplifier $A_{13}$. The output end of the operational amplifier $A_{13}$ is connected to the positive input end of the operational amplifier $A_{12}$. When the impedance element $Z_{13}$ is a resistor and the impedance element $Z_{14}$ is a capacitor, because the positive input end of the operational amplifier $A_{13}$ is connected to the grounding circuit, the instantaneous current equalization compensating current signal $(K_2 \times (I_0 - I_1))$ input by the first summator to the negative end of the operational amplifier $A_{13}$ is used to charge the impedance element $Z_{14}$, so that an output voltage signal of the impedance element $Z_{14}$ is the current equalization compensating voltage Verr obtained by performing integration on the current equalization compensating current signal $K_2 \times (I_0 - I_1)$.

For example, as shown in FIG. 3A and FIG. 3B, the integrator 3123 may further include a second summator. A first positive input end of the second summator is connected to the second input end of the integrator 3123. A second positive input end of the second summator is connected to the output end of the current equalizer 314. An output end of the second summator is connected to the positive input end of the operational amplifier $A_{12}$. The second summator may obtain the reference voltage Vref by using the first positive input end of the second summator, obtain the current equalization compensating voltage Verr by using the second positive input end of the second summator, perform summation processing on the reference voltage signal Vref and the current equalization compensating voltage Verr to obtain a sum voltage Vref + Verr, and then output the sum voltage Vref + Verr to the positive input end of the operational amplifier A12 by using the output end of the second summator. In this case, based on a characteristic that a voltage at the positive input end of the operational amplifier $A_{12}$ is the same as a voltage at the negative input end of the operational amplifier $A_{12}$, a voltage at the output end of the subtracter 311, that is, a load voltage Vp - Vn, may be calculated based on the following formula (1.6):

$$V_{A11} = Vp - Vn = Vref + Verr - K_3 * I_1 * Z_{11} \ldots \tag{1.6}$$

As shown in FIG. 6, in the case of current equalization compensation, a start point of the secondary-phase power supply circuit 310 changes from Vref to Vref + Verr. When the load slope $K_3 \times Z_{11}$ corresponding to the secondary-phase power supply circuit 310 is less than the load slope $K_1 \times Z_{01}$ corresponding to the primary-phase power supply circuit 300, a loadline of the secondary-phase power supply circuit 310 is a straight line corresponding to S 21 shown in FIG. 6. When the load slope $K_3 \times Z_{11}$ corresponding to the secondary-phase power supply circuit 310 is greater than the load slope $K_1 \times Z_{01}$ corresponding to the primary-phase power supply circuit 300, a loadline of the secondary-phase power supply circuit 310 is a straight line corresponding to S 22 shown in FIG. 6. In this manner, the secondary-phase power supply circuit 310 may adjust the current equalization compensating voltage Verr based on the load current $I_0$, corresponding to the load voltage Vp - Vn, at the output end of the primary-phase power supply circuit 300, to change the start point of the loadline of the secondary-phase power supply circuit 310 to Vref + Verr, so that the loadline of the secondary-phase power supply circuit 310 intersects the loadline of the primary-phase power supply circuit 300 at a node A. A load voltage corresponding to the node A is Vp - Vn. A load current corresponding to the node A is the load current $I_0$ at the output end of the primary-phase power supply circuit 300. Therefore, it can be learned that the secondary-phase power supply circuit 310 adjusts the current equalization compensating voltage Verr, so that the load current $I_1$ at the output end of the secondary-phase power supply circuit 310 can be equal to the load current $I_0$ at the output end of the primary-phase power supply circuit 300.

In the foregoing implementation, the secondary-phase power supply circuits may perform adaptive voltage positioning in a distributed manner, and each secondary-phase power supply circuit can quickly adjust a load current at an output end of the secondary-phase power supply circuit based on a difference between the load current at the output end of the secondary-phase power supply circuit and the load current at the output end of the primary-phase power supply circuit, to approach the load current at the output end of the primary-phase power supply circuit. In this way, power supply circuits of all phases can maintain a same load characteristic as far as possible. In this manner, the secondary-phase power supply circuit can implement a current equalization function in a process of implementing adaptive voltage positioning, so that flexibility is high.

In an optional implementation, the output end controller may further include a switch disposed between the input end and the first output end of the current sampler 313, and the output end controller may be further configured to:

turn on the first output end of the current sampler 313, so that the secondary-phase power supply circuit 310 adjusts the load voltage based on the load current output by the first output end of the current sampler 313, to implement adaptive voltage positioning of the secondary-phase power supply circuit 310; or

turn off the first output end of the primary-phase current sampler 313, so that the secondary-phase power supply circuit 310 adjusts the load voltage only based on the reference voltage and does not implement adaptive voltage positioning.

For example, in a possible case, the output end controller may turn off the first output end of the current sampler 303 and turn on the first output end of the current sampler 313, so that the primary-phase power supply circuit 300 does not implement adaptive voltage positioning, but the secondary-phase power supply circuit 310 implements adaptive voltage positioning. In this case, the load voltage Vp - Vn corresponding to the primary-phase power supply circuit 300 is fixedly the reference voltage Vref, the load voltage Vp - Vn corresponding to the secondary-phase power supply circuit 310 still changes linearly with the load current $I_1$ based on the load slope $K_3 \times Z_{11}$, and a load characteristic relationship corresponding to power supply circuits of all phases is shown in FIG. 7. In this manner, although the primary-phase power supply circuit 300 no longer performs adaptive voltage positioning, the secondary-phase power supply circuit 310 may still adjust the current equalization compensating voltage Verr based on the load current $I_0$ of the output end of the primary-phase power supply circuit 300, to change a start point of the loadline of the secondary-phase power supply circuit 310 to Vref + Verr, so that the load current at the output end of the secondary-phase power supply circuit 310 is equal to the load current at the output end of the primary-phase power supply circuit 300.

In the foregoing implementation, the output end controller is disposed, so that the multiphase power supply can further implement or not implement adaptive voltage positioning of a power supply circuit of a specific phase according to an actual requirement of a user. For example, adaptive voltage positioning of the primary-phase power supply circuit is used as an example. In a case, if an electricity quantity of the multiphase power supply is insufficient, the first output end of the current sampler of the primary-phase power supply circuit may be turned off, and the first output end of the current sampler of each secondary-phase power supply circuit may be turned on. This can make each secondary-phase power supply circuit and the primary-phase power supply circuit have consistent load characteristics while reducing an electric energy loss of the multiphase power supply. However, in this manner, the primary-phase power supply circuit can no longer implement adaptive voltage positioning. In another case, if an electricity quantity of the multiphase power supply is sufficient, both the first output end of the current sampler of the primary -phase power supply circuit and the first output end of the current sampler of each secondary-phase power supply circuit may be turned on. This not only makes power supply circuits of different phases have consistent load characteristics, but also enables the primary-phase power supply circuit and each secondary-phase power supply circuit to perform adaptive voltage positioning separately.

In this embodiment of this application, if power supply circuits of all phases have a current equalization function, each secondary-phase power supply circuit adjusts a load current at an output end of the secondary -phase power supply circuit based on the load current at the output end of the primary -phase power supply circuit. Therefore, the load current at the output end of the primary -phase power supply circuit determines the load current at the output end of the power supply circuit of each phase, and the primary-phase power supply circuit may be considered as a reference phase of a load characteristic in the power supply circuit of each phase. When the power supply circuits of the K phases include only a subtracter and a voltage compensator, if a power supply circuit of one phase needs to be selected from the power supply circuits of the K phases as a primary-phase power supply circuit and then structures of the primary -phase power supply circuit and a secondary -phase power supply circuit needs to be improved, to make a load characteristic of a power supply circuit of each phase more accurate, for example, a power supply circuit with higher component performance may be selected from the power supply circuits of the phases as a primary-phase power supply circuit, for example, a power supply circuit in which power consumption is low, noise interference is the smallest, and an equivalent resistance value of an element is the smallest. Certainly, in another example, the primary-phase power supply circuit may be alternatively disposed according to a user requirement. This is not specifically limited.

In an optional implementation, the multiphase power supply may further include at least one inductance element. A power supply circuit of each phase corresponds to one of the at least one inductance element. For a power supply circuit of each phase, an output end of the power supply circuit of the phase is connected to a first end of an inductance element corresponding to the power supply circuit of the phase, and a second end of the inductance element corresponding to the power supply circuit of the phase is connected to the first end of the load device. The inductance element corresponding to the power supply circuit of the phase may receive, from the first end of the inductance element, an output electrical signal output by the power supply circuit of the phase, and then perform filtering processing on the output electrical signal, to convert a control square wave signal into a triangular wave current signal corresponding to the power supply circuit of the phase. For example, as shown in FIG. 3A and FIG. 3B, when the multiphase power supply includes the primary-phase power supply circuit 300 and the secondary-phase power supply circuit 310, the multiphase power supply may further include an inductance element $L_0$ corresponding to the primary-phase power supply circuit 300, equivalent impedance $R_0$ corresponding to the inductance element $L_0$, an inductance element $L_1$ corresponding to the secondary-phase power supply circuit 310, and equivalent impedance $R_1$ corresponding to the inductance element $L_1$. The inductance element $L_0$ is connected in series to the equivalent impedance $R_0$ corresponding to the inductance element $L_0$. The inductance element $L_1$ is connected in series to equivalent impedance $R_1$ corresponding to the inductance element $L_1$. The inductance element $L_0$ is configured to filter the output electrical signal of the primary-phase power supply circuit 300. The inductance element $L_1$ is configured to filter the output electrical signal of the secondary -phase power supply circuit 310.

For example, as shown in FIG. 3A and FIG. 3B, the multiphase power supply may further include a capacitance element (Cout) and a resistance element (Rerr). A first end of the capacitance element Cout is connected to the first end of the load device Rout. A second end of the capacitance element Cout is connected to a first end of the resistance element Rerr. A second end of the resistance element Rerr is connected to the second end of the load device Rout. The capacitance element Cout may be a filter capacitor. The capacitance element Cout is configured to obtain an output electrical signal of a power supply circuit of each phase from the first end of the capacitance element Cout, and then perform filtering processing on the output electrical signal (for example, filtering out an alternating-current component in the output electrical signal) and output a filtered output electrical signal to the load device Rout by using the second end of the capacitance element Cout. In this way, the output electrical signal output by the multiphase power supply to the load device is smoother. The resistance element Rerr may be equivalent impedance corresponding to the capacitance element Cout. For example, as shown in FIG. 3A and FIG. 3B, the second end of the load device Rout is further connected to the grounding circuit by using a resistance element Rpcb. The resistance element Rpcb may be a board-level parasitic impedor of a printed circuit board (PCB, Printed Circuit Board) on which the multiphase power supply is located.

An embodiment of this application further provides an electronic device. The electronic device may include the multiphase power supply according to any implementation in the foregoing content, and a phase controller. The multiphase power supply may include power supply circuits of K phases, where K is a positive integer greater than or equal to 2. The phase controller is connected to a phase control end of a power supply circuit of each phase in the power supply circuits of the K phases. An output end of the power supply circuit of each phase in the power supply circuits of the K phases is connected to a positive end of a battery. A negative end of the battery is connected to a grounding circuit. When the multiphase power supply is used to supply power to the battery, the phase controller may send, to the phase control end of the power supply circuit of each phase, a phase-staggered triangular wave signal corresponding to the power supply circuit of each phase. The power supply circuit of each phase determines a corresponding power supply time period based on the phase-staggered triangular wave signal, and supplies power to the electronic device in the corresponding power supply time period, for example, supplies power to a system of the electronic device.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A multiphase power supply, comprising K phases of power supply circuits, wherein K is a positive integer greater than or equal to 2;

   an $i^{th}$-phase power supply circuit comprises an input end, an output end, a first feedback end, and a second feedback end, the input end receives an input electrical signal, the output end and the first feedback end are connected to a first end of a load device, and the second feedback end is connected to a second end of the load device; and
   the $i^{th}$-phase power supply circuit is configured to: adjust the input electrical signal based on a specified voltage adjustment ratio corresponding to the $i^{th}$-phase power supply circuit to obtain an output electrical signal, and output the output electrical signal to the first end of the load device by using the output end; and obtain a load voltage at the two ends of the load device by using the first feedback end and the second feedback end, and when the load voltage is different from a reference voltage, adjust the specified voltage adjustment ratio corresponding to the $i^{th}$-phase power supply circuit, wherein
   i is any positive integer ranging from 1 to K.

2. The multiphase power supply according to claim 1, wherein the $i^{th}$-phase power supply circuit comprises a subtracter and a voltage compensator, a first input end of the subtracter is connected to the first feedback end of the $i^{th}$-phase power supply circuit, a second input end of the subtracter is connected to the second feedback end of the $i^{th}$-phase power supply circuit, an output end of the subtracter is connected to a first input end of the voltage compensator, a second input end of the voltage compensator obtains the reference voltage, a power supply end of the voltage compensator is connected to the input end of the $i^{th}$-phase power supply circuit, and an output end of the voltage compensator is connected to the output end of the $i^{th}$-phase power supply circuit; and
   the voltage compensator is configured to: adjust the input electrical signal based on the specified voltage adjustment ratio to obtain the output electrical signal, and adjust the specified voltage adjustment ratio based on the load voltage and the reference voltage.

3. The multiphase power supply according to claim 2, wherein the subtractor comprises a first operational amplifier, a first resistance element, a second resistance element, a third resistance element, and a fourth resistance element, a first end of the first resistance element is connected to the first input end of the subtracter, a second end of the first resistance element is separately connected to a positive input end of the first operational amplifier and a first end of the second resistance element, a second end of the second resistance element is connected to a grounding circuit, a first end of the third resistance element is connected to the second input end of the subtracter, a second end of the third resistance element is separately connected to a negative input end of the first operational amplifier and a first end of the fourth resistance element, a second end of the fourth resistance element is connected to an output end of the first operational amplifier, and the output end of the first operational amplifier is connected to a first input end of a voltage adjustment ratio adjustment circuit.

4. The multiphase power supply according to claim 2 or 3, wherein the voltage compensator comprises the voltage adjustment ratio adjustment circuit and a voltage adjustment circuit, a voltage adjustment ratio of the voltage adjustment circuit is the specified voltage adjustment ratio, a first input end of the voltage adjustment ratio adjustment circuit is connected to the first input end of the voltage compensator, a second input end of the voltage adjustment ratio adjustment circuit is connected to the second input end of the voltage compensator, an output end of the voltage adjustment ratio adjustment circuit is connected to a control end of the voltage adjustment circuit, an input end of the voltage adjustment circuit is connected to the power supply end of the voltage compensator, and an output end of the voltage adjustment circuit is connected to the output end of the voltage compensator.

5. The multiphase power supply according to claim 4, wherein the voltage adjustment ratio adjustment circuit comprises a first integrator, a comparator, and a driver, and the voltage adjustment circuit comprises a switch circuit; and

a first input end of the first integrator is connected to the first input end of the voltage adjustment ratio adjustment circuit, a second input end of the first integrator is connected to the second input end of the voltage adjustment ratio adjustment circuit, an output end of the first integrator is connected to a negative input end of the comparator, a positive input end of the comparator receives a phase-staggered triangular wave signal corresponding to the $i^{th}$-phase power supply circuit, an output end of the comparator is connected to an input end of the driver, an output end of the driver is connected to the output end of the voltage adjustment ratio adjustment circuit, a control end of the switch circuit is connected to the control end of the voltage adjustment circuit, an input end of the switch circuit is connected to the input end of the voltage adjustment circuit, and an output end of the switch circuit is connected to the output end of the voltage adjustment circuit.

6.  The multiphase power supply according to claim 5, wherein the first integrator comprises a second operational amplifier, a first impedance element, and a second impedance element, a first end of the first impedance element is connected to the first input end of the first integrator, a second end of the first impedance element is separately connected to a negative input end of the second operational amplifier and a first end of the second impedance element, a positive input end of the second operational amplifier is connected to the second input end of the first integrator, a second end of the second impedance element is connected to an output end of the second operational amplifier, and the output end of the second operational amplifier is connected to the negative input end of the comparator.

7.  The multiphase power supply according to claim 5 or 6, wherein the $i^{th}$-phase power supply circuit further comprises a current sampler, an input end of the current sampler is connected to the output end of the voltage adjustment circuit, and a first output end of the current sampler is connected to the negative input end of the second operational amplifier; and
    the current sampler is configured to: obtain, by using the input end of the current sampler, a load current signal output by the $i^{th}$-phase power supply circuit, adjust the load current signal based on a first sampling ratio, and then output an adjusted load current signal by using the first output end of the current sampler.

8.  The multiphase power supply according to claim 7, wherein the multiphase power supply comprises a primary-phase power supply circuit and at least one secondary -phase power supply circuit; and
    the multiphase power supply further comprises an output end controller, and the output end controller is configured to:

    turn on a first output end of a current sampler of the primary-phase power supply circuit, or
    turn on a first output end of a current sampler of the at least one secondary -phase power supply circuit.

9.  The multiphase power supply according to claim 7 or 8, wherein the multiphase power supply comprises a primary-phase power supply circuit and at least one secondary -phase power supply circuit, each of the at least one secondary -phase power supply circuit further comprises a current equalizer, a first input end of the current equalizer is connected to a second output end of a current sampler of the primary -phase power supply circuit, a second input end of the current equalizer is connected to a second output end of a current sampler of the secondary -phase power supply circuit, and an output end of the current equalizer is connected to a positive input end of a second operational amplifier of the secondary -phase power supply circuit; and
    a current sampler of a power supply circuit of each phase is further configured to: adjust, based on a second sampling ratio, a load current signal output by the power supply circuit, and output an adjusted load current signal by using a second output end of the current sampler.

10. The multiphase power supply according to claim 9, wherein the current equalizer comprises a first summator and a second integrator, a positive input end of the first summator is connected to the second output end of the current sampler of the primary-phase power supply circuit, a negative input end of the first summator is connected to the second output end of the current sampler of the secondary -phase power supply circuit, an output end of the first summator is connected to a negative input end of the second integrator, a positive input end of the second integrator is connected to the grounding circuit, and an output end of the second integrator is connected to the positive input end of the second operational amplifier of the secondary-phase power supply circuit.

11. The multiphase power supply according to claim 10, wherein the second integrator comprises a third operational amplifier, a third impedance element, and a fourth impedance element, a first end of the third impedance element is connected to the output end of the first summator, a second end of the third impedance element is separately connected to a negative input end of the third operational amplifier and a first end of the fourth impedance element, a positive input end of the third operational amplifier is connected to the grounding circuit, a second end of the fourth impedance element is connected to an output end of the third operational amplifier, and the output end of the third operational amplifier is connected to the positive input end of the second operational amplifier of the secondary-phase power supply circuit.

12. The multiphase power supply according to claim 10 or 11, wherein the first integrator further comprises a second summator, a first positive input end of the second summator is connected to the output end of the second integrator, a second positive input end of the second summator obtains the reference voltage, and an output end of the second summator is connected to the positive input end of the second operational amplifier.

13. The multiphase power supply according to any one of claims 1 to 12, wherein the multiphase power supply comprises a primary-phase power supply circuit and at least one secondary-phase power supply circuit, the primary-phase power supply circuit is located in a primary -phase chip, and one or more secondary -phase power supply circuits of the at least one secondary -phase power supply circuit are located in at least one secondary -phase chip.

14. A multiphase power supply, comprising K phases of power supply circuits, wherein K is a positive integer greater than or equal to 2; and

> an $i^{th}$-phase power supply circuit comprises a subtracter, a voltage adjustment ratio adjustment circuit, and a voltage adjustment circuit, a voltage adjustment ratio of the voltage adjustment circuit is a specified voltage adjustment ratio, a first input end of the subtracter is connected to a first end of a load device, a second input end of the subtracter is connected to a second end of the load device, an output end of the subtracter is connected to a first input end of the voltage adjustment ratio adjustment circuit, a second input end of the voltage adjustment ratio adjustment circuit obtains a reference voltage, an output end of the voltage adjustment ratio adjustment circuit is connected to a control end of the voltage adjustment circuit, an input end of the voltage adjustment circuit receives an input electrical signal corresponding to the $i^{th}$-phase power supply circuit, and an output end of the voltage adjustment circuit is connected to the first end of the load device, wherein
> i is any positive integer ranging from 1 to K.

15. The multiphase power supply according to claim 14, wherein the subtractor comprises a first operational amplifier, a first resistance element, a second resistance element, a third resistance element, and a fourth resistance element, a first end of the first resistance element is connected to the first input end of the subtracter, a second end of the first resistance element is separately connected to a positive input end of the first operational amplifier and a first end of the second resistance element, a second end of the second resistance element is connected to a grounding circuit, a first end of the third resistance element is connected to the second input end of the subtracter, a second end of the third resistance element is separately connected to a negative input end of the first operational amplifier and a first end of the fourth resistance element, a second end of the fourth resistance element is connected to an output end of the first operational amplifier, and the output end of the first operational amplifier is connected to a first input end of a voltage adjustment ratio adjustment circuit.

16. The multiphase power supply according to claim 14 or 15, wherein the voltage adjustment ratio adjustment circuit comprises a first integrator, a comparator, and a driver, and the voltage adjustment circuit comprises a switch circuit; and
a first input end of the first integrator is connected to the first input end of the voltage adjustment ratio adjustment circuit, a second input end of the first integrator is connected to the second input end of the voltage adjustment ratio adjustment circuit, an output end of the first integrator is connected to a negative input end of the comparator, a positive input end of the comparator receives a phase-staggered triangular wave signal corresponding to the $i^{th}$-phase power supply circuit, an output end of the comparator is connected to an input end of the driver, an output end of the driver is connected to the output end of the voltage adjustment ratio adjustment circuit, a control end of the switch circuit is connected to the control end of the voltage adjustment circuit, an input end of the switch circuit is connected to the input end of the voltage adjustment circuit, and an output end of the switch circuit is connected to the output end of the voltage adjustment circuit.

17. The multiphase power supply according to claim 16, wherein the first integrator comprises a second operational amplifier, a first impedance element, and a second impedance element, a first end of the first impedance element is connected to the first input end of the first integrator, a second end of the first impedance element is separately connected to a negative input end of the second operational amplifier and a first end of the second impedance element, a positive input end of the second operational amplifier is connected to the second input end of the first integrator, a second end of the second impedance element is connected to an output end of the second operational amplifier, and the output end of the second operational amplifier is connected to the negative input end of the comparator.

18. The multiphase power supply according to claim 16 or 17, wherein the $i^{th}$-phase power supply circuit further comprises a current sampler, an input end of the current sampler is connected to the output end of the voltage adjustment circuit, and a first output end of the current sampler is connected to the negative input end of the second operational amplifier; and

the current sampler is configured to: obtain, by using the input end of the current sampler, a load voltage signal output by the $i^{th}$-phase power supply circuit, adjust the load current signal based on a first sampling ratio, and then output an adjusted load current signal by using the first output end of the current sampler.

19. The multiphase power supply according to claim 18, wherein the multiphase power supply comprises a primary-phase power supply circuit and at least one secondary-phase power supply circuit; and

the multiphase power supply further comprises an output end controller, and the output end controller is configured to:

turn on a first output end of a current sampler of the primary-phase power supply circuit, or
turn on a first output end of a current sampler of the at least one secondary -phase power supply circuit.

20. The multiphase power supply according to claim 18 or 19, wherein the multiphase power supply comprises a primary -phase power supply circuit and at least one secondary -phase power supply circuit, each of the at least one secondary-phase power supply circuit further comprises a current equalizer, a first input end of the current equalizer is connected to a second output end of a current sampler of the primary -phase power supply circuit, a second input end of the current equalizer is connected to a second output end of a current sampler of the secondary-phase power supply circuit, and an output end of the current equalizer is connected to a positive input end of a second operational amplifier of the secondary-phase power supply circuit; and

a current sampler of a power supply circuit of each phase is further configured to: adjust, based on a second sampling ratio, a load current signal output by the power supply circuit, and output an adjusted load current signal by using a second output end of the current sampler.

21. The multiphase power supply according to claim 20, wherein the current equalizer comprises a first summator and a second integrator, a positive input end of the first summator is connected to the second output end of the current sampler of the primary-phase power supply circuit, a negative input end of the first summator is connected to the second output end of the current sampler of the secondary -phase power supply circuit, an output end of the first summator is connected to a negative input end of the second integrator, a positive input end of the second integrator is connected to the grounding circuit, and an output end of the second integrator is connected to the positive input end of the second operational amplifier of the secondary -phase power supply circuit.

22. The multiphase power supply according to claim 21, wherein the second integrator comprises a third operational amplifier, a third impedance element, and a fourth impedance element, a first end of the third impedance element is connected to the output end of the first summator, a second end of the third impedance element is separately connected to a negative input end of the third operational amplifier and a first end of the fourth impedance element, a positive input end of the third operational amplifier is connected to the grounding circuit, a second end of the fourth impedance element is connected to an output end of the third operational amplifier, and the output end of the third operational amplifier is connected to the positive input end of the second operational amplifier of the secondary-phase power supply circuit.

23. The multiphase power supply according to claim 21 or 22, wherein the first integrator further comprises a second summator, a first positive input end of the second summator is connected to the output end of the second integrator, a second positive input end of the second summator obtains the reference voltage, and an output end of the second summator is connected to the positive input end of the second operational amplifier.

24. The multiphase power supply according to any one of claims 14 to 23, wherein the multiphase power supply comprises a primary-phase power supply circuit and at least one secondary -phase power supply circuit, the primary-phase power supply circuit is located in a primary-phase chip, and one or more secondary-phase power supply circuits of the at least one secondary-phase power supply circuit are located in at least one secondary-phase chip.

25. An electronic device, comprising the multiphase power supply according to any one of claims 1 to 13 or claims 14 to 24, and a phase controller, wherein the multiphase power supply comprises power supply circuits of K phases, K is a positive integer greater than or equal to 2, and the phase controller is connected to a phase control end of a power supply circuit of each phase in the power supply circuits of the K phases;

> the phase controller is configured to send, to the phase control end of the power supply circuit of each phase, a phase-staggered triangular wave signal corresponding to the power supply circuit of each phase; and
> the power supply circuit of each phase is configured to supply power to the electronic device in a corresponding power supply time period based on the phase-staggered triangular wave signal corresponding to the power supply circuit of each phase.

FIG. 1

FIG. 2

FIG. 3A

FIG. 3B

Secondary-phase power supply circuit 310

EP 4 152 584 A1

FIG. 4

FIG. 5

FIG. 6

FIG. 7

## INTERNATIONAL SEARCH REPORT

| International application No. |
| --- |
| **PCT/CN2020/099007** |

### A. CLASSIFICATION OF SUBJECT MATTER

H02M 1/084(2006.01)i

According to International Patent Classification (IPC) or to both national classification and IPC

### B. FIELDS SEARCHED

Minimum documentation searched (classification system followed by classification symbols)

H02M; G06F

Documentation searched other than minimum documentation to the extent that such documents are included in the fields searched

Electronic data base consulted during the international search (name of data base and, where practicable, search terms used)

CNABS; CNTXT; CNKI; DWPI; SIPOABS: 多相, 电源, 电路, 输入, 反馈, 输出, 调压, multi phase , power, circuit, input, feedback, output, voltage regulation.

### C. DOCUMENTS CONSIDERED TO BE RELEVANT

| Category* | Citation of document, with indication, where appropriate, of the relevant passages | Relevant to claim No. |
| --- | --- | --- |
| A | CN 102609066 A (HONGFUJIN PRECISION INDUSTRY (SHENZHEN) CO., LTD. et al.) 25 July 2012 (2012-07-25) description, paragraphs 30-36, figure 1 | 1-25 |
| A | CN 103676815 A (GIGA-BYTE TECHNOLOGY CO., LTD.) 26 March 2014 (2014-03-26) entire document | 1-25 |
| A | CN 108696120 A (INFINEON TECHNOLOGIES AUSTRIA AG.) 23 October 2018 (2018-10-23) entire document | 1-25 |
| A | WO 2017139550 A1 (ALCATEL-LUCENT USA INC.) 17 August 2017 (2017-08-17) entire document | 1-25 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 March 2021** | **01 April 2021** |

| Name and mailing address of the ISA/CN | Authorized officer |
| --- | --- |
| China National Intellectual Property Administration (ISA/CN) No. 6, Xitucheng Road, Jimenqiao, Haidian District, Beijing 100088 China | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2020/099007**

| Patent document cited in search report | | | Publication date (day/month/year) | Patent family member(s) | | | Publication date (day/month/year) |
|---|---|---|---|---|---|---|---|
| CN | 102609066 | A | 25 July 2012 | US | 2012188805 | A1 | 26 July 2012 |
| | | | | US | 8508198 | B2 | 13 August 2013 |
| CN | 103676815 | A | 26 March 2014 | TW | I487256 | B | 01 June 2015 |
| | | | | CN | 103676815 | B | 28 December 2016 |
| | | | | TW | 201409910 | A | 01 March 2014 |
| CN | 108696120 | A | 23 October 2018 | US | 10153697 | B2 | 11 December 2018 |
| | | | | US | 2018294719 | A1 | 11 October 2018 |
| WO | 2017139550 | A1 | 17 August 2017 | US | 2017237349 | A1 | 17 August 2017 |

Form PCT/ISA/210 (patent family annex) (January 2015)